(19) Europäisches Patentamt
European Patent Office
Office européen des brevets

(11) EP 3 408 309 B1

(12) **EUROPEAN PATENT SPECIFICATION**

(45) Date of publication and mention of the grant of the patent:
**20.11.2019 Bulletin 2019/47**

(21) Application number: **17705561.3**

(22) Date of filing: **27.01.2017**

(51) Int Cl.:
***C08G 65/332*** *(2006.01)* ***C08G 65/334*** *(2006.01)*

(86) International application number:
**PCT/EP2017/051828**

(87) International publication number:
**WO 2017/129781 (03.08.2017 Gazette 2017/31)**

(54) **LINEAR POLYGLYCEROL DERIVATIVES, A METHOD FOR MANUFACTURING AND APPLICATIONS**

LINEARE POLYGLYCEROLDERIVATE, VERFAHREN ZUR HERSTELLUNG UND ANWENDUNGEN

DÉRIVÉS DE POLYGLYCÉROL LINÉAIRES, PROCÉDÉ DE FABRICATION ET APPLICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.01.2016 EP 16153144**

(43) Date of publication of application:
**05.12.2018 Bulletin 2018/49**

(73) Proprietors:
- **Freie Universität Berlin**
  **14195 Berlin (DE)**
- **Humboldt-Universität zu Berlin**
  **10099 Berlin (DE)**

(72) Inventors:
- **HAAG, Rainer**
  **12209 Berlin (DE)**
- **HERRMANN, Andreas**
  **14467 Potsdam (DE)**
- **BHATIA, Sumati**
  **14129 Berlin (DE)**
- **LAUSTER, Daniel**
  **10439 Berlin (DE)**

(74) Representative: **Maikowski & Ninnemann Patentanwälte Partnerschaft mbB**
**Postfach 15 09 20**
**10671 Berlin (DE)**

(56) References cited:
**WO-A1-2015/074139 WO-A2-2009/032605**

- **ILONA PAPP ET AL: "Inhibition of Influenza Virus Activity by Multivalent Glycoarchitectures with Matched Sizes", CHEMBIOCHEM, vol. 12, no. 6, 11 April 2011 (2011-04-11) , pages 887-895, XP055143419, ISSN: 1439-4227, DOI: 10.1002/cbic.201000776**
- **ERBERICH M ET AL: "Polyglycidols with two orthogonal protective groups: Preparation, selective deprotection, and functionalization", MACROMOLECULES, AMERICAN CHEMICAL SOCIETY, US, vol. 40, no. 9, 4 June 2007 (2007-06-04), pages 3070-3079, XP008158619, ISSN: 0024-9297, DOI: 10.1021/MA0627875 [retrieved on 2007-04-06]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 408 309 B1

## Description

The invention relates to a linear polyglycerol compound according to the preamble of claim 1, to uses thereof according to the preambles of claims 10 and 11, to a combined preparation according to the preamble of claim 12, to uses of this combined preparation according to the preamble of claim 13 and to a manufacturing method according to the preamble of claim 15.

Influenza infection causes millions of deaths worldwide every year despite of drugs and vaccines available. The influenza virus enters the host cell through multivalent interactions between viral hemagglutinin glycoproteins and sialic acid residues on the cell surface. Blocking the virus at this very first step of infection can be used as a preventive measure for influenza especially in high risk patients.

Presently, neuraminidase binding drugs like Tamiflu are being used prophylactically or at the early stage of an influenza infection in high dosage of 30 mg (in patients with body weight <15 kg) to 75 mg (body weight >40 kg) daily for at least two weeks in high risk patients by oral intake. The use of high dosage of this drug is also one of the reasons for development of Tamiflu-resistant viruses in patients infected with influenza. Tamiflu-resistant strains have already been found in 0.4 to 4 % of patients with higher resistant strains in children and this has been gradually increasing since year 2004 (cf. www.fda.gov/downloads/Drugs/DrugSafety/DrugShortages/UCM183850.pdf).

The emergence of drug-resistant influenza virus strains has made the discovery of new antiviral therapeutics indispensable. The idea of using multivalent inhibitors, which target hemagglutinin glycoproteins on influenza virus, as therapeutic or prophylactic drug has not been accepted well till now because the optimization of such inhibitors to achieve high efficiency without toxicity is a big challenging task.

The development of such a multivalent inhibitor demands a deep understanding of the influence of different factors like size, flexibility, ligand density, and linker length on multivalent interactions. In the past, different types of carrier backbones were adopted for the preparation of glycoconjugates bearing multiple sialic acid residues. These carrier backbones include sialoglycopeptides, polysaccharides, proteins, dendrimers, dendritic polyglycerol, liposomes, linear polymers, and nanostructures.

E.g., Papp et al. describes the inhibition of influenza viruses by hyperbranched polyglycerol derivatives [1]. Furthermore, Whitesides et al. and Matrosovich et al. reported on polyacrylamide sialosides, which were found to be efficient showing $K_i$ values in lower nanomolar range but serious concerns were raised about the toxicity of the polymers.

Erberich et al. describes, amongst others, a linear polyglycerol carrying 2-Acetylamino-2-deoxy-3,4,6-tri-O-acetyl-D-glucose residues as substituents [17].

WO 2009/032605 A2 describes bi-functional polymer-attached inhibitors of influenza virus.

It is an object of the present invention to provide novel nontoxic substances that can be used, amongst others, as antiviral drugs.

This object is achieved by linear polyglycerol compounds having the features according to the claim 1.

Such linear polyglycerol compounds comprise a backbone of linearly linked glycerol units that are optionally terminally substituted. According to the claimed invention, each linear polyglycerol compound carries a plurality of substituents in the nature of covalently bound residues chosen from the group consisting of sialic acid and sialic acid derivatives. Thereby, a degree of substitution (also referred to as degree of functionalization, DF) of the backbone is between 10 and 100 %. I.e., 10 % to 100 % of all hydroxide groups of the polyglycerol backbone are substituted by the before-mentioned substituents.

It is possible that all substituents are of the same chemical nature in a single linear polyglycerol compound molecule. Alternatively, it is possible that different substituents are present in one and the same linear polyglycerol compound molecule.

Surprisingly, these linear polyglycerol compounds showed a much better antiviral effect than the hyperbranched polyglycerol with an 11 carbon spacer between the polymer and the sialic acid ligand, which were described earlier by Papp et al. [1]. In a cell binding inhibition assay, $IC_{50}$ values of 200 $\mu$M sialic acid concentrations for both IPGSA 3 and 4 have been determined, while Papp et al. reported $IC_{50}$ values between 1.4 and 2.2 mM sialic acid concentrations. Furthermore, linear polyglycerol sialosides demonstrated to have much better antiviral effects than Tamiflu investigated by *in vivo* experiments.

Since all compounds that have been synthesized by the inventors so far have been non-toxic, the claimed compounds are, in an embodiment, compounds that are non-toxic for humans or animals, in particular non-toxic for humans, non-human mammals and rodents.

In an embodiment, the linear polyglycerol backbone additionally carries at least one further substituent in the nature of a covalently bound residue chosen from the group consisting of buffering agents, amines and sulfates. Thus, the backbone of the linear polyglycerol compound can be substituted by one or more buffering agents, one or more amines and/or by one or more sulfates along with the sialic acid residues and/or the sialic acid derivative residues.

In an embodiment, the substituents are at least one sialic acid derivative according to general formulae (I) or (II), wherein a covalent bond is formed between the backbone and residue Y of the sialic acid derivative:

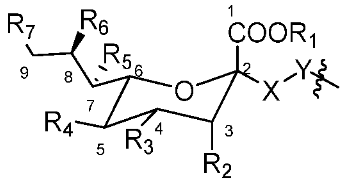

(I)

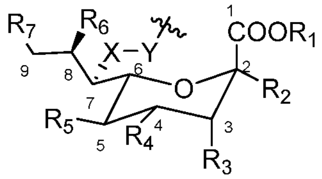

(II)

wherein the residues have the following meaning in formula (I):

$R_1$ = H or $CH_3$,
$R_2$ = H, F, Cl, Br, or $NHC(NH)NH_2$,
$R_3$ = H, OH, F, Cl, or Br,
$R_4$ = $NHCH_2COOH$, $SCH_2COOH$, $NHCO(CH_2)_nCH_3$, or $SCO(CH_2)_nCH_3$,
$R_5$ = H, OH, F, Cl, Br, $OCONH_2$, or $OCONH(CH_2)_nCH_3$,
$R_6$ = H, OH, F, Cl, Br, $OCONH_2$, or $OCONH(CH_2)_nCH_3$,
$R_7$ = H, OH, F, Cl, Br, $OCONH_2$, or $OCONH(CH_2)_nCH_3$, and
X = S and Y = $CH_2$, $(CH_2)_3OCH_2$, or $CH_2(CCHNNN)CH_2$, or
X = O and Y = NHCH2, and
n = 0 to 10, independently from other variables n in the same molecule or in other molecules

and wherein the residues have the following meaning in formula (II):

$R_1$ = H or $CH_3$,
$R_2$ = H, OH, or F,
$R_3$ = H, F, or $NHC(NH)NH_2$,
$R_4$ = H, OH, F, Cl, Br,
$R_5$ = $NHCH_2COOH$, $SCH_2COOH$, $NHCOCH_2OH$, $NHCO(CH_2)_nCH_3$, or $SCO(CH_2)_nCH_3$,
$R_6$ = H, OH, F, Cl, Br, $OCONH_2$, or $OCONH(CH_2)_nCH_3$,
$R_7$ = H, OH, F, Cl, Br, $OCONH_2$, or $OCONH(CH_2)_nCH_3$, and
X = S and Y = $CH_2$, $(CH_2)_3OCH_2$, or $CH_2(CCHNNN)CH_2$, or
X = NH and Y = COCH2, and
n = 0 to 10, independently from other variables n in the same molecule or in other molecules,

wherein the bond between the C2 atom and the C3 atom in formula (II) can be single bond or a double bond.

Since the before-mentioned residues are based on sialic acid, the accordingly substituted linear polyglycerol compounds can also be denoted as linear polyglycerol sialosides.

According to formula (I), a linkage of the sialic acid (derivative) residue to the polyglycerol backbone is formed via the C-2 atom of the sialic acid (derivative) residue.

According to formula (II), a linkage of the sialic acid (derivative) residue to the polyglycerol backbone is formed via the C-7 atom of the sialic acid (derivative) residue.

In an embodiment, $R_2$ and $R_3$ in formula (I) both mean F so that the sialic acid derivative is a difluorosialic acid derivative.

In an embodiment, $R_3$ and $R_4$ in formula (II) both mean F so that the sialic acid derivative is a difluorosialic acid derivative.

In an embodiment, the substituents correspond to formula (I), wherein $R_1$ = H, $R_2$ = H, $R_3$ = OH, $R_4$ = $NHCOCH_3$, $R_5$ = OH, $R_6$ = OH, $R_7$ = OH, X = S and Y = $(CH_2)_3OCH_2$ In an embodiment, the substituents correspond to formula (I), wherein $R_1$ = H, $R_2$ = H, $R_3$ = OH, $R_4$ = $NHCOCH_3$, $R_5$ = OH, $R_6$ = OH, $R_7$ = OH, X = S and Y = $CH_2(CCHNNN)CH_2$.

In an embodiment, the substituents correspond to formula (II), wherein $R_1$ = H, $R_2$ = H, $R_3$ = H, $R_4$ = OH, $R_5$ = $NHCOCH_3$, $R_6$ = OH, $R_7$ = OH, X = S and Y = $(CH_2)_3O$. In an embodiment, the substituents correspond to formula (II), wherein $R_1$ = H, $R_2$ = H, $R_3$ = H, $R_4$ = OH, $R_5$ = $NHCOCH_3$, $R_6$ = OH, $R_7$ = OH, X = S and Y = $CH_2(CCHNNN)CH_2$-.

The residue $CH_2(CCHNNN)CH_2$ is a cyclic residue that can also be represented by the following formula (III):

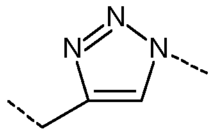

(III)

Thereby, dashed lines indicate bonds that will be formed to neighboring residues or molecule parts.

In an embodiment, an accordingly substituted linear polyglycerol compound can correspond to the following formulae (IV), (V), (VI) or (VII):

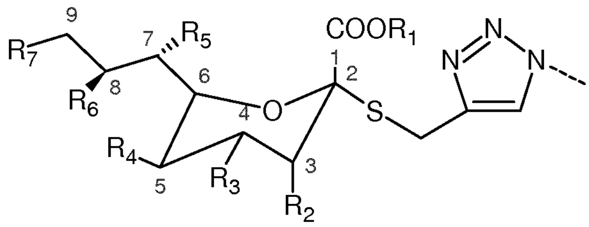

(IV)

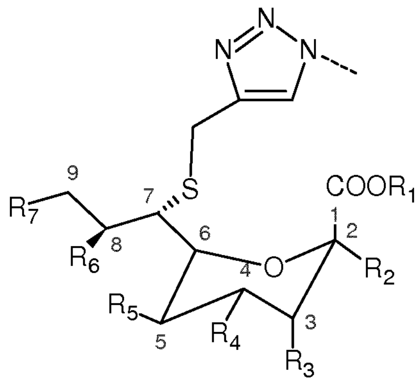

(V)

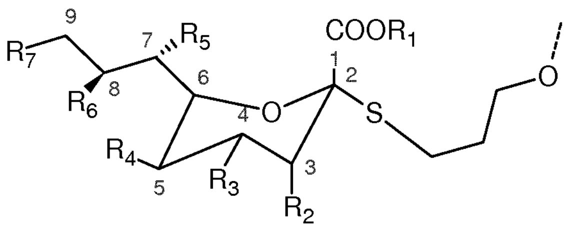

(VI)

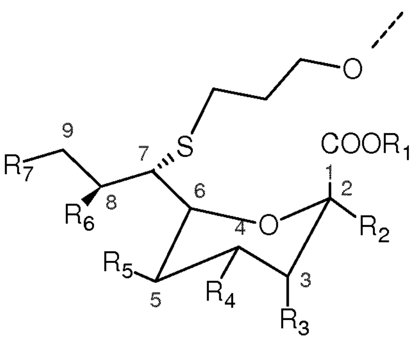

(VII)

Thereby, residues $R_1$ to $R_7$ can have the general meanings explained in connection to formulae (I) and (II) or the specific meanings indicated just above.

In an embodiment, that the degree of substitution of the backbone is between 10 % and 80 %, in particular between 15 % and 95 %, in particular between 20 % and 90 %, in particular between 25 % and 85 %, in particular

between 30 % and 80 %, in particular between 35 % and 75 %, in particular between 40 % and 70 % (in each case including the upper and lower limits). A very well suited range of substitution is between 40 % and 80 %. Another very well suited degree of substitution is between 42 % and 75 %.

In an embodiment, the median carbon atom of a first glycerol unit in the linear polyglycerol compound (C2 atom) is linked to one of the two terminal carbon atoms in a second glycerol unit (C1 atom) via an ether. Thereby, a 1,2-linkage between adjacent glycerol units in the linear polyglycerol compound is formed. It can also be denoted as 2,1-linkage. In an embodiment, the terminal carbon atom of a first glycerol unit in the linear polyglycerol compound (C1 or C3 atom) is linked to one of the two terminal carbon atoms in a second glycerol unit (C1 or C3 atom) via an ether. Thereby, a 1,3-linkage between adjacent glycerol units in the linear polyglycerol compound is formed. It can also be denoted as 3,1-linkage. In an embodiment, the glycerol units of the claimed compounds are either exclusively 1,2-linked or 1,3-linked to each other.

The general formulae of such 1,2-linked and 1,3-linked polyglycerol compounds are depicted below, wherein the meanings of the indicated residues in an embodiment are also indicated:

1,2-linked linear polyglycerol

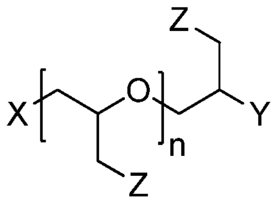

1,3-linked linear polyglycerol

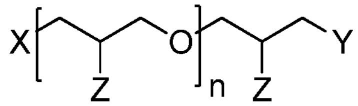

with

n = 5 to 1000,

X, Y = independently from each other any organic residue with a functional group chosen from the group consisting of alcohol (hydroxyl), amine, thiol, azide, alkyne, alkene, carboxylic acid, aldehyde, ketone, halogen, isocyanate, isothiocyanate, Michael acceptor/donor group,

Z = independently from other residues Z in the same polyglycerol molecule a residue chosen from the group consisting of OH, sialic acid, and sialic acid derivatives.

Thereby, 10 to 100 % of all residues Z are distinct from OH.

In an embodiment, the compound (backbone plus substituents) has a number average molecular weight ($M_n$) of 1 kDa to 100 kDa, in particular of 2 kDa to 90 kDa, in particular of 3 kDa to 80 kDa, in particular of 4 kDa to 70 kDa, in particular of 5 kDa to 60 kDa, in particular of 10 kDa to 60 kDa, in particular of 12 kDa to 55 kDa, in particular of 15 kDa to 50 kDa, in particular of 20 kDa to 45 kDa, in particular of 25 kDa to 50 kDa, in particular of 25 kDa to 45 kDa, in particular of 30 kDa to 55 kDa, in particular of 30 kDa to 52 kDa, in particular of 32 kDa to 50 kDa. $M_n$ is thereby determined by gel permeation chromatography (GPC) as typically applied for this purpose by a person skilled in the art. Other generally suited methods for determining $M_n$ are matrix-assisted laser desorption/ionization - time of flight mass spectroscopy (MALDI-TOF) and multi angle light scattering (MALS) leading to approximately the same results as GPC.

Thereby, a combination of the before mentioned molecular weight ranges with a degree of substitution of 30 % to 80 % is particularly well suited. In addition, a combination with a degree of substitution of 40 % to 80 % is also particularly well suited. Thus, in an embodiment, the compound might have a number average molecular weight ($M_n$) of 30 kDa to 52 kDa and a degree of substitution of 30 % to 80 %. In another embodiment, the compound might have a number average molecular weight ($M_n$) of 30 kDa to 52 kDa and a degree of substitution of 40 % to 80 %. These combinations are particularly suited if the substituent is a sialic acid or sialic acid derivative residue such as the substituents of formulae (IV) to (VII).

In an embodiment, the linear polyglycerol compound is terminally functionalized with a functional group chosen from the group consisting of azide, bromide, chloride, iodide, fluoride, primary amine, secondary amine, tertiary amine, carboxylic acids, thiols, disulfides, ketals, acetals, aldehydes, and of hydroxyl, isocyanate, isothiocyanate, unsaturated carbon-carbon units having double or triple bonds, a Michael acceptor (such as an $\alpha,\beta$-unsaturated aldehyde, ketone, ester, carboxylic acid amide, carboxylic acid imide, such as maleimide, or an $\alpha,\beta$-unsaturated nitrile) and a Michael donor (such as organic copper compounds, amines, thiols, phenolate ions, cyanides and acrylates). I.e., at least one terminus of the polyglycerol compound carries an according reactive group in this embodiment.

In an embodiment, the described linear polyglycerol compound is used as a medicament, namely as prophylactic or therapeutic agent. Suited areas of application are antiviral therapy (post infection) and prophylactic treatments of individuals to avoid a viral infection. Thus, the instant invention relates to method of treating a human or an animal (in particular a non-human mammal) in need thereof with a prophylactic or therapeutic agent comprising a linear polyglycerol compound according to the preceding explanations.

In an embodiment, the described linear polyglycerol compound is used as an antiviral agent, an antibacterial agent or an anti-inflammatory agent. Thus, the instant invention relates to method of treating a human or an animal (in particular a non-human mammal) in need thereof with an antiviral agent, an antibacterial agent or an anti-inflammatory agent comprising a linear polyglycerol compound according to the preceding explanations.

In an embodiment, the agent is used against Orthomyxoviridae, in particular influenza A virus, influenza B virus, and/or influenza C virus. Thereby, a use against influenza A virus is particularly suited.

It will become evident from the exemplary embodiments described subsequently that the linear polyglycerol compounds are particularly well suited to be used in combination with "classic" neuraminidase inhibitors like Oseltamivir (Tamiflu), Zanamivir (Relenza), Laninamivir (Inavir), and Peramivir since they show a synergistic effect regarding the virus replication inhibition.

In an embodiment, the invention relates to a combined preparation comprising a linear polyglycerol compound according to the preceding explanations and a neuraminidase inhibitor. In an embodiment, these compounds are the only pharmaceutically active compounds in the combined preparation. Thereby, particularly well suited linear polyglycerol compounds are those carrying a sialic acids residue or sialic acid derivative residue as substituent. A particularly well suited neuraminidase inhibitor is Tamiflu.

In an embodiment, the invention relates to the simultaneous, separate sequential use of the pharmaceutically active compounds of the before-mentioned combined preparation in antiviral, antibacterial, or anti-inflammatory prophylaxis or therapy. The simultaneous use is particularly suited. However, the pharmaceutically active compounds (in particular exclusively a linear polyglycerol compound and a neuraminidase inhibitor) can be present in the combined preparation in a galenic form that enables a timely staggered release of the individual compounds so as to allow for sequential use of the individual pharmaceutically active substances of the combined preparation.

In an embodiment, the before-mentioned use is a use in antiviral prophylaxis or therapy. In a further embodiment, the antiviral prophylaxis or therapy is directed against influenza virus.

Summarizing, the linear polyglycerol compounds described herein (lPG) are nontoxic and biocompatible and, therefore, can be explored for the development of multivalent glycoarchitectures bearing multiple substitutes, such as sialic acid residues or sialic acid derivative residues.

In an aspect, the invention also relates to a method for manufacturing a linear polyglycerol compound according to the preceding explanations. This method comprises the following steps:

a) providing a linear polyglycerol compound, comprising a backbone of linearly linked glycerol residues bearing hydroxyl groups or other functional groups chosen from the group consisting of allyl, azides, alkynes, alkenes, thiols, halogens, primary or secondary amines, carboxylic acids, aldehydes, ketons and any Michael donor or acceptor for conjugation of anionically charged entities, and

b) causing a reaction of at least some of these hydroxyl groups or these other functional groups of the linear polyglycerol compound provided in step a) with a compound able to introduce a residue chosen from the group consisting of sialic acid and sialic acid derivatives into the linear polyglycerol compound.

In step a) allyl and azide a particularly suited functional groups. The reaction partners used in step b) might carry a thiol group or a thiopropargyl group to allow for formation of a covalent bond.

All embodiments of the described linear polyglycerol compound, the described combined preparation, their uses and the disclosed methods can be combined in any desired way and are transferable to any other or same category of subject-matter that is herein disclosed (i.e. from the compound to a method or from a method to a use or from a use to a method of from the compound to the combined preparation etc.).

Aspects of the invention will now be explained in more detail by examples and accompanying Figures. In the Figures:

FIG 1 shows a reaction scheme for 2 synthesis routes of different linear polyglycerol compounds;

FIG 2 shows volume/size distribution profiles for a linear polyglycerol and different linear polyglycerol compounds;

FIG 3A shows the results of hemagglutination inhibition with linear polyglycerol sialosides at different sialic acid densities;

FIG 3B shows the enhancement factor β of the tested linear polyglycerol sialoside based on their inhibition potential compared to monomeric α-2,6-sialyllactose;

FIG 3C shows the binding inhibition of R 18 labeled X 31 virus to human red blood cells with the most potent linear polyglycerol compounds;

FIG 4 shows the change in fluorescence upon binding of linear polyglycerol sialosides at different concentrations to fluorescently labeled X31;

FIG 5A shows cell viability after a treatment of MDCK II cells with inhibitors at different concentrations for 24 h;

FIG 5B shows infection inhibition curves of the most potent linear polyglycerol compounds from an infection assay with X31;

FIG 5C shows infection inhibition with the most potent inhibitors 24 h after infection with X31 at 1 mM sialic acid equivalents;

FIG 5D shows normalization of infected cells to the untreated case;

FIG 6 shows the results of an experiment in which MDCK II cells were infected for 1 h with X31 indicating the power of infection inhibition at a late state of infection;

FIG 7A shows the results of an infection inhibition experiment with X31 in BALB/c mice using a linear polyglycerol compound as inhibitor;

FIG 7B shows the results of an infection inhibition experiment with X31 in BALB/c mice using a linear polyglycerol compound and/or Tamiflu as a separate, secondary inhibitor;

FIG 8 shows the antiviral activity of $LPG_{30}SA_{0.40}$ against two avian influenza strains post infection; and

FIG 9 shows the results of a neuraminidase activity inhibition assay.

The figures will be explained in more detail with respect to the following explanations of exemplary embodiments.

## Exemplary Embodiments

A detailed analysis of random coiled particles of a sialic acid conjugate (Mw=32 kDa, 44% SA) of a linear polyglycerol (lPG or linPG or LPG) having a hydrodynamic diameter ($d_H$) of 6.3 nm and a number average molecular weight ($M_n$) of 10 kDa with dynamic light scattering, cryo-TEM as well as toxicity and efficacy assays was done. Subsequently, the results of this analysis together with the results of analyses of similar linear polyglycerol compounds will be presented, showing that low molecular weight linear polyglycerol sialosides are much more potent compounds than Tamiflu, in particular for a preventive treatment plan against influenza.

### Synthesis of linear sialic acid conjugated polyglycerols 2-6

For a detailed insight of the multivalent interactions between multivalent sialosides and hemagglutinin (HA) on influenza virus, a library of compounds was synthesized based on one polymeric backbone, namely, lPG **1** ($M_n$=10.1 kDa, D=1.29). lPG **1** was synthesized by following previously reported procedures [2-6] and fully characterized by $^{1}$HNMR, $^{13}$CNMR, and gel permeation chromatography (GPC). Thiopropargyl sialic acid was synthesized using methods previously published [7, 8].

Generally, the degree of sialic acid functionalization in the final compounds was controlled by using the limited equivalents of mesyl chloride in the first synthetic step. The consumption of all the azide groups in the click conjugation step was monitored by infrared spectroscopy (IR). Saturated EDTA solution was used during dialysis of the final product to remove Cu ions.

For the preparation of linear polyglycerol sialosides (lPGSAs or linPGSAs) **2-5**, a three step procedure starting from lPG **1** was chosen: allylation, thiol-ene click reaction, and hydrolysis of the sialic acid conjugated product with 2M NaOH (see Figure 1, upper line). The thiol-ene click reaction appeared to be much less complicated than the click reaction because of the less time required for reaction completion and also due to the absence of Cu. Here, the degree

of sialic acid conjugation was controlled by degree of allylation which in turn controlled by using limited equivalents of NaH in the reaction mixture.

Consumption of all the allyl groups was easily monitored by $^1$HNMR. One compound in the IPGSA series, namely the compound IPGSA **6,** was prepared by Cu-assisted click reaction also starting form IPG **1** also in three steps: three steps: mesylation, substitution by azide, and copper-catalyzed Sharpless/Huisgen click reaction IPGN3 with propargylated sialic acid (SA). This different synthesis approach was chosen to find out if there is any influence of the short thio-methylene-triazolyl or thio-propylene linker on the activity of the compounds (see Figure **1,** lower line). This was not found to be the case later on in the HA assay.

With reference to Figure 1, the synthesis of allylated IPG **1a-1d** will now be explained. IPG **1** (0.1 g, 0.14 mmol OH to be functionalized) was dried at 60 °C overnight under high vacuum. Dried IPG was dissolved in dry dimethylformamide (DMF) (3 mL) and cooled to 0 °C. To the stirred solution of IPG in dry DMF at 0 °C, NaH (4.59 mg, 0.18 mmol, 1.3 eq., 95%) was added. After addition ice bath was removed and the temperature of the reaction mixture was allowed to reach room temperature. The reaction mixture was allowed to stir at room temperature for 2 h and cooled down again to 0 °C. The allyl bromide (24.12 μl, 0.28 mmol, 2.0 eq.) in dry DMF (1 mL) was added drop wise to the reaction mixture using a syringe at 0°C. The ice bath was removed and after stirring for 16 hours at room temperature the reaction was quenched with water. The DMF was removed in vacuum and the resulting mixture was dialyzed in methanol (MeOH) to afford 90 mg of hPG-allyl **1a.** Degree of allylation was quantified as 10 % by $^1$H NMR. Yield = 84%. 1H NMR (500 MHz, $CD_3OD$): δ(ppm) = 5.97-5.89 (m, 1H, $OCH_2CH{=}CH_2$), 5.23 (dd, 2H, $J_1$=45Hz, $J_2$=10Hz, $OCH_2CH{=}CH_2$), 4.01 (d, 1H, $J$=5Hz, $OCH_2CH{=}CH_2$), 3.71-3.49 (m, IPG backbone). 13C{1H} NMR (125 MHz, $CD_3OD$): δ(ppm) = 136.19 ($OCH_2CH{=}CH_2$), 117.25 ($OCH_2CH{=}CH_2$), 73.32 ($OCH_2CH{=}CH_2$), 81.55, 80.16, 71.17, 70.95, 70.74, 70.58, 62.63 (IPG backbone). IR ($CH_3OH$): ν(cm-1) = 3338, 2907, 2066, 1645, 1460, 1420, 1349, 1201, 1260, 1100, 997, 923. Table 1 shows the yields and different degree of allylation achieved as determined by 1HNMR.

Table 1: Yield and degree of functionalization of IPG-allyl

| IPG-allyl | 1a | 1b | 1c | 1d |
|---|---|---|---|---|
| DF(%) | 10 | 44 | 73 | 100 |
| Yield % | 84 | 80 | 86 | 87 |

**Synthesis of IPGSA$_{protected}$ 2-5**

IPG-allyl **1a** (0.08g, 0.102 mmol of allyl group) was dissolved in dry methanol (3ml). Added freshly prepared thio-sialic acid (77.46 mg, 0.153 mmol, 1.5 eq.) and 2,2-dimethoxy-2-phenylacetophenone (DMPA) as radical initiator (26.14 mg, 0.102 mmol, 1.0 eq.). The catalytic amount of *tris*(2-carboxyethyl)phosphine hydrochloride (TCEP-HCl) was added to the reaction to avoid oxidation of thio-sialic acid. The solution was degassed by flushing argon through the reaction mixture for 10 minutes. The reaction mixture was stirred and irradiated with UV light using high pressure UV lamp at room temperature for 2 hours. The reaction completion was monitored by 1HNMR by looking for disappearance of resonance peak corresponding to one of the allyl protons at δ 5.85. The reaction mixture was dialyzed to remove DMPA and excess of sialic acid derivative against methanol to afford the 107.8 mg IPGSA$_{protec}$ **2.**

Conversion: quantitative (determined by $^1$H NMR). Yield= 82%. 1H NMR (500 MHz, $CD_3OD$): δ(ppm): 5.35 (brs, 3H, H-8, NH, H-7, SA), 4.84 (m, 1H, H-4, SA), 4.57-3.49 [m, SA (H-9, H-5, H-6, $COOCH_3$, $-SCH_2CH_2CH_2O-$), and IPG backbone], 2.85-2.61 (m, 3H, SA, H-3e,$-SCH_2CH_2CH_2O-$), 2.17-1.83 (m, 18H, 8SA, 4×$OCOCH_3$, H-3a, $-NHCOCH_3$, $-SCH_2CH_2CH_2O-$). 13C{1H} NMR (125 MHz, $CD_3OD$): δ(ppm)=173.34, 172.36, 171.77, 171.62, 171.43, 170.08 ($-COOCH_3$, 4×$-COCH_3$, $-NHCOCH_3$), 84.41 (SA C-2), 81.56-62.56 (IPG backbone, SA: C-6, C-4, C-8, C-7, C-9), 53.60 ($-COOCH_3$), 49.97, 49.85 (C-5), 39.15 (C-3), 31.08 ($-SCH_2CH_2CH_2O-$), 26.75-20.88 (-NHCOCH3, $-SCH_2CH_2CH_2O-$, 4×$-COCH_3$). IR ($CH_3OH$): 3363, 2932, 2874, 1735, 1662, 1548, 1369, 1216, 1119, 1076, 1030, 951 $cm^{-1}$.

Table 2 shows the yields and degree of functionalization of **IPGSA$_{protected}$ 2-5** achieved.

Table 2: Yield and degree of functionalization of **IPGSA$_{protected}$ 2-5**

| IPGSA$_{protected}$ | 2 | 3 | 4 | 5 |
|---|---|---|---|---|
| DF(%) | 10 | 44 | 73 | 100 |
| Yield % | 82 | 77 | 70 | 80 |

**Synthesis of IPGSAs 2-5**

2M NaOH (5ml) was added to the IPGSA$_{protected}$ **2** (0.09g, 0.07mmol of ligands) and stirred at room temperature

for 2 h. The reaction mixture was neutralized by adding 2M HCl solution and dialyzed against water for 3 days. The solvent of the dialysis was changed thrice a day. The aqueous solution obtained after dialysis was lyophilized to afford the pure 72.5 mg IPGSA **2.**

Conversion: quantitative (determined by $^1$H NMR). Yield= 92%. **$^1$H NMR** (500 MHz, $D_2O$, δ): 3.88-3.56 [m, SA (H-8, NH, H-7, H-4, H-9, H-5, H-6, -$SCH_2CH_2$*$CH_2$*O-); IPG backbone], 2.81-2.70 (m, 3H, SA, H-3e, -$SCH_2$*$CH_2$*$CH_2O$-), 1.75-2.08 (m, 3H, SA, H-3a, -NHCOCH3,-S*$CH_2$*$CH_2CH_2O$-). 13C{1H} NMR (125 MHz, $D_2O$): δ(ppm) = 175.06, 174.20 (-*C*OOH, NH*C*O$CH_3$), 86.21 (SA C-2), 79.69-60.78 (IPG backbone, SA: C-6, C-4, C-8, C-7, C-9), 51.78, 51.62 (C-5), 41.17 (C-3), 29.19 (-$SCH_2$*$CH_2$*$CH_2O$-), 26.25 (-NHCO*$CH_3$*), 22.07 (-S*$CH_2$*$CH_2CH_2O$-). IR (solid): 3358, 3292, 2926, 2876, 1740, 1660, 1604, 1371, 1223, 1120, 1037 $cm^{-1}$..

Table 3 shows the yields, DF, and average molecular weight as determined by 1HNMR/GPC of the final compounds IPGSA **2-5.**

Table 3: Yield of IPGSA **2-5**

| **IPG-SA** | **2** | **3** | **4** | **5** |
|---|---|---|---|---|
| **DF(%)** | 10 | 44 | 73 | 100 |
| **Yield %** | 92 | 87 | 44 | 79 |
| ***Mw* (kDa) (NMR) *GPC ($H_2O$)** | 15 | 31.7 | 46 | 59 |
| **Mn (kDa)** | 12.4 | 39.25 | 33.70 | 49.25 |
| **Mw (kDa)** | 16.93 | 67.62 | 54.02 | 63.56 |
| **PDI** | 1.35 | 1.72 | 1.60 | 1.29 |

### Synthesis of IPG-OMs 1e

IPG **1** (0.1g, 0.27 mmol OH to be functionalized) was dried at 60 °C overnight under high vacuum. Dried IPG was dissolved in dry DMF (3 mL) followed by addition of triethylamine (57.18 μL, 0.41 mmol, 1.5 eq with respect to OH group) and cooled to 0 °C. Then methane sulphonyl chloride (MsCl) (27.16μl, 0.35mmol, 1.3 eq. with respect to OH group) in dry DMF (1 mL) was added drop wise using a syringe at 0 °C. After stirring the solution for 1 h at 0 °C, the mixture was allowed to reach room temperature and was stirred for 16 h. The dry DMF was removed in vacuo and the resulting mixture was dialyzed in MeOH to afford 96.4 mg of IPG-OMs as a honey-like product. Degree of mesylation was quantified as 20% by $^1$H NMR.

Yield = 80%. **$^1$H NMR (500** MHz, $D_2O$, δ): 4.43-3.52 (m, $CH_2$ and CH, PG scaffold); 3.16 (brs, $CH_3$ mesyl), IR (film): v = 3398, 2913, 2877, 1653, 1459, 1349, 1168, 1109, 1081, 931, 838 $cm^{-1}$.

### Synthesis of IPG-$N_3$ 1f

IPG-OMs **1e**, DF=20% (0.09 g, 0.20 mmol OMs) was dissolved in dry DMF (5 mL) in a one-neck flask equipped with a refluxing condenser. NaN3 (65.52 mg, 1.00 mmol, 5 eq. with respect to OMs group) was added to the reaction mixture and stirred at 60 °C for 3 days. The resulting salts were filtered off. DMF from the reaction mixture was evaporated using rotor vapor and the residue was dialyzed in MeOH to obtain 0.081g of IPG-$N_3$ **1f**.

Conversion: quantitative (determined by $^1$H NMR). Yield= 98%. **$^1$H NMR** (500 MHz, MeOD, δ): 3.72-3.38 (m, $CH_2$ and CH, IPG scaffold), IR ($CH_3OH$): *v* = 3349, 2922, 2878, 2098 (N3), 2034, 1633, 1540, 1160, 1041 $cm^{-1}$.

### Synthesis of IPGSA 6

IPG-$N_3$ **1f**, DF=20% (0.07 g, 0.17 mmol N3 groups) was dissolved in 4ml of THF-$H_2O$ (1:1) solvent mixture followed by addition of solution of propargylated SA derivative (120.6 mg, 0.22 mmol, 1.3 eq. with respect to N3 groups) in THF (1ml). $CuSO_4 \cdot 5H_2O$ (8.4 mg, 0.034mmol, 0.2 eq with respect to N3 groups) was dissolved in 0.2 ml of $H_2O$ and added to the solution of Na.ascorbate (67.3mg, 0.34mmol, 2.0 eq with respect to N3 groups) in 0.4 ml $H_2O$. The resultant solution of salts in water was added drop wise to the solution containing IPG-$N_3$ and propargylated SA. The reaction mixture was degassed thoroughly with argon for 5 minutes and then allowed to stir for 3 days at room temperature under argon atmosphere. The progress of the reaction was monitored by IR. When the peak at ~2100$cm^{-1}$ corresponding to azide stretching frequency completely disappeared, solvent of the reaction mixture was evaporated at rota vapor. 2M NaOH (8ml) was added to the residue, and stirred at room temperature for 2hrs. The reaction mixture was neutralized by adding 2M HCl solution and dialyzed against water and saturated EDTA solution for 2 days and again using water for 4 days. The solvent of the dialysis was changed thrice a day. The aqueous solution obtained after dialysis was lyophilized to afford the pure 98.5 mg IPGSA **6.**

Conversion: quantitative (determined by $^1$H NMR). Yield= 78%. **$^1$H NMR** (500 MHz, $D_2O$, $\delta$): 8.01 (s, 1H, C=CH), 4.69-3.45 [m, SA (H-8, NH, H-7, H-4, H-9, H-5, H-6); SCH2C=C; and IPG core], 2.81-2.80 (m, 1H, SA, H-3e), 2.01(s, 1H, SA, NHAc), 1.88-1.84 (m, 1H, SA, H-3a). **13C{1H} NMR** (125 MHz, D2O): 174.93 (O=C, NHAc), 172.19 (C-1, SA), 144.21 (C=CH), 125.35 (C=CH), 83.72 (C-2, SA); 79.86, 79.75, 79.65, 7954, 79.43, 77.61, 74.89, 71.12, 68.93, 68.67, 68.34, 68.20, 68.09, 67.88, 62.80, 62.57, 60.74, 60.66 (IPG backbone, C-6, C-8, C-7, C-9, C-4, SA), 51.66, 51.20 (C-5, SA), 40.01 (C-3), 23.13 (NHAc), 22.06 ($-CH_2-$, SA). IR (film): $v$ = 3355, 2929, 2879, 1698, 1640, 1558, 1457, 1430, 1374, 1346, 1315, 1276, 1223, 1120, 1060, 955 $cm^{-1}$. $M_{w(NMR)}$=31.7kDa, $M_{w(GPC/H2O)=}$29.68.7kDa, $M_{n(GPC/H2O)=}$23.07kDa, PDI=1.28.

All the final sialic acid conjugates were well characterized by $^1$HNMR, $^{13}$CNMR, IR, and GPC. The sialic acid ligands were statistically distributed on the polymer backbone of IPG. The number of sialic acid ligands per polymer in the final compounds were determined by degree of functionalization (DF) (also referred to as degree of substitution) as obtained by $^1$HNMR and the molecular weight of the polyglycerol core (cf. Table 4 below). In case of IPGSA 5 with 100% SA functionalization, there is no free hydroxyl group on the IPG chain.

**Detailed description of synthesis and characterization of intermediates and final compounds**

All reagents and solvents were purchased from commercial suppliers and used without further purification. Reactions requiring dry or oxygen-free conditions were carried out under argon in Schlenck glassware. $^1$H and $^{13}$C NMR spectra were recorded on Bruker AMX 500 (500 and 125 MHz for 1H and 13CNMR, respectively) and Delta Joel Eclipse 700 (700 and 175 MHz for $^1$H and $^{13}$CNMR, respectively) spectrometer at 25 °C and calibrated by using the deuterated solvent peak. Infrared (IR) spectra were recorded with a Nicolet AVATAR 320 FT-IR 5 SXC (Thermo Fisher Scientific, Waltham, MA, USA) with a DTGS detector from 4000 to 650 $cm^{-1}$. For ESI measurements a TSQ 7000 (Finnigan Mat) instrument and for high-resolution mass spectra a JEOL JMS-SX-102A spectrometer was used. Molecular weight distributions of IPG **1,** and the post functionalized polymers determined by means of GPC coupled to a refractive index detector (RI) obtaining the complete distribution (Mn, Mp, Mw, dispersity). Measurements were carried out under highly diluted conditions (5 mg/mL) from a GPC consisting of an Agilent 1100 solvent delivery system with pump, manual injector, and an Agilent differential refractometer. Three 30 cm columns (PPS: Polymer Standards Service GmbH, Germany; Suprema 100 Å, 1000 Å, 3000 Å with 5 and 10 $\mu$m particle size) were used to separate aqueous polymer samples using water with 0.1N $NaNO_3$ as the mobile phase at a flow rate of 1 mL/min. The columns were operated at room temperature with the RI detector at 50 °C. The calibration was performed by using certified standards pullulan (linear) and dextran (branched) from PSS. WinGPC Unity from PSS was used for data acquirement and interpretation. DLS measurements of the various polymers were conducted by using a NanoDLS particle sizer (Brookhaven Instruments Corp.) at 25 °C. Aqueous samples were filtered through 0.2 mm filters prior to analysis. Water of Millipore quality was used in all experiments. An USHIO super high mercury lamp (USH 102d, 100 W) was used for UV assisted thiol-ene click reaction.

Naturally occurring sialic acids constitute a family of more than 50 structurally distinct nine-carbon 3-deoxy-ulosonic acids, the most widespread derivative being 5-N-acetyl-neuraminic acid (Neu5Ac). In the context of the instant disclosure, the abbreviation "sialic acid" (SA) is used for for Neu5Ac. The polymers were characterized by NMR, and SEC for the determination of absolute molecular weights and dispersity (Mw/Mn). Number of ligands per particle in the final compounds were determined by degree of functionalization as obtained by $^1$HNMR and the molecular weight of the polyglycerol core. Postfunctionalized average molecular weight of the final compounds was calculated by using the Mn of the polyglycerol core and the experimental degree of functionalization as determined by $^1$HNMR.

**Characterization of IPGSAs 2-6**

**Size analysis in aqueous solution**

Dynamic light scattering was used for the determination of hydrodynamic diameter ($d_H$) of final sialic acid conjugates IPGSAs **2-6** in PBS (pH 7.4, 10 mM). All polymer conjugates were freely soluble in aqueous solution as all sample solution appeared clear. Measurements were carried out at a concentration of 1g/L for all the polymers. The results have been summarized in Table 4, and the corresponding volume size distribution profiles are displayed in Figure 2.

Table 4: Characterization of IPG **1** and IPGSAs **2-6.**

| PGOH/PGSA | $M_n$[a] (kDa) | DF[b] % | Vol. $Z_{av.}$[c] (d. nm) | PDI[c] | SA/polymer[d] |
|---|---|---|---|---|---|
| **11** | 10 | - | 6.38±0.16 | 0.71±0.04 | |
| **12** | 15 | 10 | 9.81±2.13, (95.36)% | 0.45±0.06 | 14 |

(continued)

| PGOH/PGSA | $M_n$[a] (kDa) | DF[b] % | Vol. $Z_{av}$.[c] (d. nm) | PDI[c] | SA/polymer[d] |
|---|---|---|---|---|---|
| **13** | 31.7 | 44 | 10.29±1.10, (98.8%) | 0.59±0.008 | 60 |
| **14** | 46 | 73 | 10.24±1.05, (87.6%) | 0.32±0.04 | 99 |
| **15** | 59 | 100 | 11.26±0.77, (96.1)% | 0.42±0.07 | 135 |
| **16** | 21 | 20 | 7.17±0.35 | 0.68±0.01 | 27 |

[a] IPG **11:** average molecular weight 10 kDa was used; Mw/Mn = 1.29; postfunctionalized Mn calculated by using the Mn of the polyglycerol core and the experimental degree of functionalization.
[b] determined by $^1$HNMR analysis
[c] determined by DLS (PBS, 10 mM, pH 7.4); the values represent the means of at least three experiments ± standard deviation
[d] the number of sialic acid (SA) units per polymer was calculated from DF as determined by $^1$HNMR

Functionalized IPGSAs **2-6** were found to be bigger than the non-functionalized IPG 1 although the increase in hydrodynamic diameter with increasing SA conjugation was a bit random (Figure 2). A representative compound, namely IPGSA **4** was analyzed by cryo-TEM at two different concentrations, namely, 1 μM and 5 μM. Most of the IPGSA **4** conjugates were observed as small spherical clusters with a diameter of less than 7 nm along with some aggregates in the form of large spherical morphologies with a diameter of greater than 30 nm. The morphology of the lin PGSA particles were not perfectly spherical. This can be due to the presence of coiled structure of linear polymer in aqueous medium. Generally, a tendency to form aggregates was found to be higher at higher concentration of IPGSA **4** in cryo-TEM micrographs at different concentrations, although the concentrations used in the different assays were much lower than 1 μM nanoparticles. The $d_H$ of IPGSA **4** was observed to be 10.24 nm along with some aggregates in the size range of 40-50 nm in DLS. This is in line with the size observed in cryo-TEM micrographs.

**Hemagglutination inhibition (HAI) assay**

The sialic acid conjugated polyglycerols were investigated for hemagglutination inhibition (HAI) using 4 HA units of influenza A virus (X-31, H3N2) strain as a preliminary screening test, as shown in Figures 3A and 3B. To express the effect of multivalency, 2,6-sialyllactose was used as a control.

Figure 3A shows the results of hemagglutination inhibition with linear polyglycerol sialosides at different sialic acid densities. Error bars indicate the standard error of the mean (n≥3). Figure 3B shows the enhancement factor of each tested sialoside based on its inhibition potency compared to monomeric 2,6-sialyllactose. Figure 3C shows the results of binding inhibition of r18 labeled X31 virus to human red blood cells with the most potent linear polyglycerol compounds as inhibitor. Error bars indicate the standard error of the mean (n≥3). Data were fitted with a sigmoidal dose response to obtain $IC_{50}$ values. The results of figures 3A to 3C are summarized in Table 5.

To get an idea how differently functionalized linear polyglycerol sialosides (IPGSAs) behave in the HAI assay, five IPGSAs **2-6** with increasing degree of SA functionalization with hydrodynamic diameter ranging from 7-11 nm were synthesized and screened. The two compounds IPGSA **3** with 44% and IPGSA **4** with 73% SA functionalization appeared to have much lower $K_i$ values 19.53 μM and 8.46 μM, respectively, than the other IPGSA compounds.

In the following section, a simple statistical mechanical model is provided that can qualitatively explain the observed trends, and possibly shed some light on the origins of the observed behavior.

Table 5: Inhibitor constants from the hemagglutination and erythrocyte binding inhibition assay of the most potent candidates and monomeric α-2,6-sialyllactose as control. All values are expressed in terms of sialic acid concentration or nanoparticle concentration with its standard error of the mean (n≥3).

| **Compound** (SA%, scaffold) | **$Ki_{(HAI)}$** SA [μM] | **$Ki_{(HAI)}$** Particle [nM] | **Enhancement factor** (β) | **Binding inhibition** $IC_{50SA}$ [mM] | **Binding inhibition** $IC_{50}$particle [μM] |
|---|---|---|---|---|---|
| α-2,6-sialyllactose | 48115±1413 | - | 1 | | |
| IPGSA 1 (0%, 10kDa) | - | 2000000* | - | - | 4000* |

(continued)

| **Compound** (SA%, scaffold) | **$Ki_{(HAI)}$** SA [μM] | **$Ki_{(HAI)}$** Particle [nM] | **Enhancement factor (β)** | **Binding inhibition** $IC_{50SA}$ [mM] | **Binding inhibition** $IC_{50}$particle [μM] |
|---|---|---|---|---|---|
| IPGSA 2 (10%, 10kDa) | 2000* | 139860* | - | 2.8±0.3 | 200.0 ± 21.4 |
| IPGSA 3 (44%, 10kDa) | 19.5±5.9 | 328.0±98.4 | 2463 | 0.2±0.0 | 3.3±0 |
| IPGSA 4 (73%, 10kDa) | 5.9±2.7 | 59.2±27.2 | 8212 | 0.2±0.1 | 2.0±1.0 |
| IPGSA 5 (100%, 10kDa) | 1000.0±0.0 | 7407.4±0.0 | 48 | 1* | 7.4* |
| IPGSA 6 (20%, 10kDa) | 1860.0±620. 0 | 68888.9 ± 22963.0 | 26 | 4* | 148.1* |
| *Maximum tested concentration | | | | | |

**Determination of binding affinity of polyglycerol sialosides to whole virus particles with microscale thermophoresis**

Figure 4 shows a change in fluorescence upon binding of polyglycerol sialosides at different concentrations to fluorescently labeled X31. The examined IPGSAs show one binding step. Binding constants are described as apparent dissociation constants (Kdapp) derived from a one site binding fit of each binding step. Error bars indicate the standard error of the mean (n≥3). The determined values are summarized in the following Table 6.

Table 6: Apparent dissociation constants (Kdapp) of the most potent inhibitors.

| **Compound** (SA%, scaffold) | **Kdapp** Particle [μM] |
|---|---|
| α-2,6-sialyllactose | 2500 |
| IPGSA 1 (0%, 10kDa) | - |
| IPGSA 3 (44%, 10kDa) | 10.1±2.9 |
| IPGSA 4 (73%, 10kDa) | 0.6±0.3 |

**Theoretical model for the binding of IPGSA with influenza virus**

An important question arising from the experimental data of Figure 3A is under which conditions should one expect an optimum value for the degree of functionalization DF, and what are the parameters controlling the position of this minimum.

In this regard, the inventors propose a simple model in qualitative agreement with the obtained data, based on the statistical mechanics of multivalent binding applied to the specific system used. In the following, only the main assumptions and results of this model will be summarized.

Typically, hemagglutination inhibition due to multivalent constructs is proportional to the construct dissociation constant [9], which in turn is proportional to the exponential of the binding free-energy $\Delta G_{bind}$. Naively, one could think that a larger DF would always correspond to a lower $\Delta G_{bind}$ since more binding configurations can form, but this is not always the case. For the system disclosed here, the distance between possible binding sites and the length of the ligands makes it impossible for a ligand to be within binding distance of two different receptors at the same time. In this case, binding occurs always with an "indifferent topology" [10], and the number of binding configurations W is just equal to the number of ligands N within binding distance from the viral receptor. In this case, $\Delta G_{bind}$ decreases only logarithmically with N, and hence with DF, since the two are directly proportional to each other. However, the steric repulsion between a construct and the binding surface grows linearly with N, since each of the unbound ligands will feel some repulsion from the surface due to excluded volume effects. The full calculation of $\Delta G_{bind}$ gives:

$$\begin{aligned}\frac{\Delta G_{\rm bind}}{k_{\rm B}T} &= N\frac{\Delta G_{\rm steric}}{k_{\rm B}T} - \log N + \frac{\Delta G_{\rm bond}}{k_{\rm B}T}\\ &= N\frac{\Delta G_{\rm steric}}{k_{\rm B}T} - \Delta S_{\rm avidity}/k_B + \frac{\Delta G_{\rm bond}}{k_{\rm B}T},\end{aligned} \qquad (1)$$

where $k_B$ is Boltzmann's constant and T the system temperature. In equation 1, $\Delta G_{steric}$ measures the repulsive free-energy due to steric interactions between a single ligand and the surface of the virus when the multivalent construct is at binding distance from the surface. $\Delta G_{bond}$ is the energy of formation of a single bond. $\Delta S_{avidity} > 0$ is the further attractive contribution that arises in multivalent binding coming from the various distinct possible binding configurations achievable [10].

Given equation 1, $\Delta G_{bind}$ has a minimum at a particular value of N (and hence DF), given by $N_{opt} = 1 / \Delta G_{steric}/k_BT$, as also observed in the experimental data of Figure 3. The repulsive contribution $\Delta G_{steric}$ can be calculated by modelling the ligands as rigid rods, and two further experimental observations can then be explained. First, the leading term in $\Delta G_{steric}$ does not depend on the nanoparticle curvature, in accordance with the experimental data. Furthermore, within the same description, $\Delta G_{steric}/k_BT$ is lower for a ligand grafted to a linear polymer compared to when it is grafted on the impenetrable surface of a nanoparticle, which also explain why the minimum for IPGSA is shifted to higher values.

Whereas in general the exact value of $N_{opt}$ depends on the specific model used to describe the ligand, and an accurate calculation might require use of detailed atomistic simulations, the possible presence of a minimum arises from a very general mechanism of competition between binding entropy and steric repulsion, and is thus a general aspect of the system disclosed here.

## Infection inhibition at the early stage of infection

Figure 5A shows cell viability after a treatment of MDCK II cells with inhibitors at different concentrations for 24 h. Cell viability was monitored by using a tetrazolium salt (promega). Error bars indicate the standard error of the mean (n≥3).

Figure 5B shows infection inhibition curves of the most potent inhibitors from an infection assay with X31 at a multiplicity of infection (MOI) of 0.05. X31 was pretreated with inhibitor for 30 min, then added to cells for 1 h, followed by a washing step to remove unbound virus. 24h after infection the cell viability was monitored by using a tetrazolium salt (promega), which gets reduced upon contact to mitochondria. Error bars indicate the standard error of the mean (n≥3). The dose response was fitted with a sigmoidal dose response to obtain $IC_{50}$ values (summarized in Table 7).

Figure 5C shows infection inhibition with 1 mM sialic acid of the most potent inhibitors 24 h after infection with X31 at an MOI of 0.1. X31 was pretreated with inhibitor for 30 min, then added to cells for 1 h, followed by a washing step to remove unbound virus. Viral nucleoprotein expression was monitored by immunostaining against X31 nucleoprotein. Nuclei were stained with 4',6-diamidino-2-phenylindole (DAPI) to assess the ratio of infected cells.

Figure 5D shows normalization of infected cells to the untreated case. Inhibitor treated cells showed significantly lower amount of viral protein expression 24 h after infection, while a control inhibitor did not. Error bars indicate the standard error of the mean (n≥3). A variance analysis (ANOVA) was implied to determine significance (*** p<0.001).

The experimental results depicted in Figures 5A to 5D are summarized in the following Table 7.

Table 7: Infection inhibition constants ($IC_{50}$) of all inhibitors after infection of MDCK II cells at an MOI of 0.05 for 24 h.

| **Compound** (SA%, scaffold) | Infection inhibition $IC_{50}$ [μM] sialic acid | Infection inhibition $IC_{50}$ [nM] nanoparticle |
|---|---|---|
| α-2,6-sialyllactose | - | - |
| IPGSA 1 (0%, 10kDa) | - | - |
| IPGSA 2 (10%, 10kDa) | 32.8±3.2 | 2293.7±223.8 |
| IPGSA 3 (44%, 10kDa) | 0.2±0.0 | 3.3±0.3 |
| IPGSA 4 (73%, 10kDa) | 0.5±0.1 | 5.1±1.0 |
| IPGSA 5 (100%, 10kDa) | 4.5±1.4 | 33.3±10.4 |
| IPGSA 6 (20%, 10kDa) | 5.0±1.5 | 185.2±55.6 |

The $IC_{50}$ value has been calculated for all IPGSAs. Within the investigated concentration, no toxicity could be detected. Therefore, there is no need to calculate an SI value (therapeutic index).

**Infection inhibition at the late state of infection**

Figure 6 shows the results of an experiment in which MDCK II cells were infected for 1 h with X31 at an MOI of 0.1. Then inhibitor was added at different concentrations. 24 h after infection the viral titer was determined by a plaque assay. Error bars indicate the standard deviation ($n \geq 3$).

**Study in mouse**

Figure 7A and 7B show the results of an infection inhibition experiment with X31 in BALB/c mice. X31 was pretreated with inhibitor at the indicated concentrations, followed by intranasal application of the mixture to sedated mice.

In the experiments, the results of which are depicted in Figure 7A, the infection-related loss in body weight was daily controlled for 11 days. IPGSA 3 at 5 mM and 1 mM sialic acid concentrations was compared to infected/untreated, uninfected/untreated or infected/control treated (linPGOH 1) cases. The effect of a cytokine storm related loss in body weight was controled by using UV inactivated X31, which was not infectious, but still able to hemagglutinate as the untreated virus. Error bars indicate the standard error of the mean ($n \geq 5$).

Figure 7B shows the results of a comparison of IPGSA 3 to equimolar nanoparticle concentrations of Oseltamivir (tamiflu) or the combiantion of both inhibitors. Error bars indicate the standard error of the mean ($n \geq 5$).

Summarizing, IPGSA 3 with 44% SA was best in its inhibition potency compared to its molecular mass. Therefore, it was further investigated at the late stage of infection and in vivo. under both experimental settings the inhibitor was able to reduce infectivity significantly. In vivo 5 mM sialic acid of IPGSA 13 (83μM nanoparticle) was able to almost fully block infection. The addition of Tamiflu further boosted the inhibition, while the Tamiflu alone was not able to cause potent infection inhibition. Therefore, a combined usage of both IPGSA, in particular IPGSA 13, and Tamiflu for a therapeutic application is herewith proposed.

**Post infection inhibition of viral propagation**

Linear polyglycerols of the type $IPG_{10}SA_{0.40}$ (degree of functionalization with sialic acid: 40 %, 10 kDa scaffold) are able to inhibit viral propagation post infection of the human seasonal influenza strain X31/H3N2 and two avian influenza strains Mallard/H3N2 and Italy/H7N1. The results of an according experiment are depicted in Figure 8.

MDCK II cells were infected for 1 h with A/X31 (H3N2), A/Mallard/439/2004 (H3N2) or A/turkey/Italy/472/1999 (H7N1) virus at an MOI 0.01. Subsequently, cells were washed and incubated in the infection medium supplemented with control substance or inhibitor at indicated concentrations (corresponding to 167 nM nanoparticle concentrations for IPG 1 or 10 μM SA equivalents for $IPG_{10}SA_{0.40}$, respectively). 24 h post infection (p.i.) the viral titer was determined by a plaque assay. The error bars indicate the standard error of the mean (SEM) ($n \geq 3$). The obtained data was statistically analyzed using a two-tailed Mann-Whitney t-test. The observed inhibition of viral propagation was found to be significant (**$p<0.01$, *** $p<0.001$, **** $p<0.0001$).

These findings demonstrate the high efficacy of linear polyglycerol sialosides as antiviral compounds in a therapeutic experiment setup.

**Neuraminidase activity inhibition assay**

Influenza neuraminidase is a tetrameric glycoprotein on the viral envelope. Its role for viral entry is still under debate, however, it is indispensable for viral release from host cells. The enzyme has sialidase activity, hydrolyzing terminal Neu5Ac residues of glycobranches. Tamiflu (Oseltamivir) or Relenza (Zanamvir) acting as competitive inhibitors demonstrated potent enzyme inhibition (low nM $IC_{50}$ values), and as a consequence antiviral activity of viral propagation *in vivo* and *in vitro.*

However, a fast development of resistant strains against these inhibitors showed the limitation of such drugs for upcoming influenza mutants. The inventors' studies on viral neuraminidase activity in the presence of inhibitors suggest the highly potent ability of linear polyglycerol sialosides to interact and inhibit the catalytic neuraminidase activity with an $IC_{50}$ of 62 μM. The results are shown in Figure 9.

To obtain these results, X31/H3N2 virus (64 HAU) was maintained in the presence of a dilution series with $IPG_{10}SA_{0.40}$ for 30 minutes at room temperature, before the substrate MUNANA (20-(4-methylumbelliferyl)-a-D-N-acetyl-neuraminic acid) was added to the virus-inhibitor mix. Upon enzymatic conversion of MUNANA to the fluorescent methylumbelliferone, fluorescence (excitation: 360 nm; emission: 450 nm) was recorded using a platereader.

Since $IPG_{10}SA_{0.40}$ 1b is functionalized with the natural sialoside Neu5Ac, mutation of the structurally conserved

and essential binding pocket of neuraminidase is unlikely. Taken together, linear polyglycerol sialosides are able to bind two essential target sites (SA binding site of HA and NA) at the same time, and due to its bio mimicking properties this compound might less likely provoke a development of resistance upon mutation of the binding site. Additionally, linear polyglycerol sialosides have a much lower $IC_{50}$ value than hyperbranched polymers carrying a sialic acid residue previously described.

**Detailed description of materials and methods used for biological assays**

**Virus material:** X31 viruses (influenza strain A/Aichi/2/68 H3N2, reassorted with A/PuertoRico/8/1934 H1N1) were harvested from allantoic fluid of hen eggs. Virus isolates were clarified upon low speed centrifugation (300 g, 10 min) and concentrated by ultracentrifugation (100,000 g, 1 h). Protein concentrations were determined using a standard BCA assay (Kit from Thermo Fisher Scientific, Belgium). Viral titer was determined by TCID50 and hemagglutination. Hemagglutination units (HAU) have been assessed with 1% human red blood cells (DRK Berlin (AB+)) in PBS [1].

**Cell culture:** MDCK-II (Madin-Darby Canine Kidney Epithelial) cells have been maintained in DMEM (supplemented with 10% fetal calf serum and streptomycin/penicillin) at 37°C and 5% $CO_2$.

**Hemagglutination inhibition assay (HAI):** Inhibitors were two-fold serially diluted in PBS. Then, 4 HAU containing $4{\cdot}10^7$ virus particles [11] were added to all wells. After 30 min incubation at room temperature, 50 μl of a 1% erythrocyte solution (~$2{\cdot}10^6$ cells/μl) was added, gently mixed and incubated for 60 min at room temperature. Humanerythrocytes predominately carry α-2,6'-sialosugars. The inhibitor constant ($K_i$(HAI)) reflects the lowest inhibitor concentration, which is necessary to achieve 100% inhibition. To check for full hemagglutination inhibition, the microtiter plate was tilted by 60° to cause droplet formation from the red blood cell pellet [12].

**Single cell binding inhibition assay:** Experiments were performed as previously described [1]. In short, influenza A virus (X31) was labeled with 20 μM octadecylrhodamine B chloride (R18) in PBS and free dye was removed via virus pelleting. 5 μg labeled virus was incubated with two-fold serial dilutions of binding inhibitors, and incubated for 30 min at room temperature (0.5 μg/μl X31). The virus-inhibitor complex was mixed with 40 μl of a 1% erythrocyte solution and incubated for 30 min at room temperature. Unbound virus was removed upon centrifugation for 10 min at 1500 g. The resuspended cell pellet was analyzed for R18 fluorescence by flow cytometry (Beckton Dickinson FACScan flow cytometer). Data were acquired by using BD CellQuest. From each measurement, a single cell population was gated and median fluorescence was normalized to an untreated virus control.

**Infection inhibition assay:** Viral cytotoxicity inhibition assays have been performed using an MTS reagent (Promega). $3{\cdot}10^4$ MDCK II cells were seeded the day before infection. X31 have been pretreated with inhibitors in a two-fold dilution series for 30 min at room temperature under slight agitation. Cells were washed once with PBS ($Mg^{2+}$, $Ca^{2+}$) and pretreated virus (MOI 0.05) was added for 1 h at room temperature to allow binding. Unbound virus was removed by washing once with 37 °C infection medium (DMEM, 2 mM Glutamine, 0.1% FCS, 0.1% BSA, 2.5 μg TPCK, Pen/Strep), and subsequently incubated for 24 h at 37 °C. Two hours before the readout, 20 μl MTS solution was added to each well and put back to 37 °C for the remaining time. Finally, absorbance at 490 nm was measured and data were normalized to maximum viral cytotoxicity.

$$Infection\ inhibition\ (\%) = \frac{(Infected_{treated} - Infected_{untreated})}{(Uninfected_{untreated} - Infected_{untreated})}$$

**Viral NP expression analysis:** X31 virus has been pretreated in an inhibitor titration experiment with polyglycerols for and maintained for 30 min at room temperature. The day before MDCK-II, $5{\times}10^4$ have been seeded in an 8-well plate (ibidi). On the next day, cells have been washed once with $PBS^{++}$ and infected with treated or untreated X31 (MOI 0.1) for 1 hour on ice to synchronize the infection. Unbound virus was remove by discarding the supernatant and washing with infection media (DMEM, 0.1% FCS, 0.1% BSA). Following, cells were incubated for 24 h at 37°C and stained for viral nucleoprotein and cell nuclei with DAPI.

Here, cells have been washed, fixed with 4% paraformaldehyde (PFA) and permeabilized with 0.5% (w/v) triton X100. Further, cells have been blocked with blocking buffer ($PBS^{++}$, supplemented with 3% BSA and 100 mM glycine)

for 2 hours at room temperature (rt). Immunostaining was performed with fluoresceinisothiocyanat (FITC) coupled mouse $\alpha$NP monoclonal antibody (1:500 in $PBS^{++}$ with 1% BSA) by incubating over night at 4 °C. Further, cells were stained for their nuclei with DAPI. Stained cells have been washed with PBS++ and then used for microscopy. Next, images were recorded by using an inverted confocal microscope (Olympus IX81). Subsequently, images were analysed for viral NP expression and DAPI signal by using an imageJ software. The NP signal was expressed in ratio to infected, untreated cells.

Additionally, references [13] to [16] might be considered interesting. Thereby, references 13-15 describe L- and P- selectin inhibition and anti-inflammatory activity of sulfated and non-sulfated polymers based on hyperbranched polyglycerols. Reference [16] regards the anti-pathogenic activity of multivalent glycoconjugates.

**References cited in the preceding sections**

[1] Papp, I.; Sieben, C.; Sisson, A. L.; Kostka, J.; Böttcher, C.; Ludwig, K.; Herrmann, A.; Haag, R. ChemBioChem 2011, 12, 887-895

[2] Sunder, A.; Hanselmann, R.; Frey, H.; Mülhaupt, R. Macromolecules 1999, 32, 4240-4246;

[3] Haag, R.; Sunder, A; Stumbé, J. F. J. Am. Chem.Soc. 2000, 122, 2954-2955.

[4] Sunder, A.; Mülhaupt, R.; Haag, R.; Frey, H. Adv. Mater. 2000, 12, 235-239.

[5] Ul-haq, M. I.; Shenoi, R. A.; Brooks, D. E.; Kizhakkedathu, J. N. J. Polym. Sc. Part A: Polym. Chem. 2013, 51, 2614-262.

[6] Wilms, D.; Wurm, F.; Nieberle, J.; Böhm, P.; Kemmer-Jonas, U.; Frey, H. Macromolecules 2009, 42, 3230-3236.

[7] Gan, Z.; Roy, R. Can. J. Chem. 2002, 80, 908-916.

[8] Ogura, H.; Furuhata, K.; Itoh, M.; Shitori, Y. Carbohydr. Res. 1986, 158, 37-51

[9] Vonneman et al, "Size Dependence of Steric Shielding and Multivalency Effects for Globular Binding Inhibitors", JACS 2015, 137.

[10] Kitov, P.I. and Bundle, D.R. "On the Nature of the Multivalency Effect: A Thermodynamic Model", JACS 2003, 125.

[11] Cross, G. Semin. Avian Exot. Pet Med 2002, 11, 15-18.

[12] The preparation and chemical characteristics of hemoglobin-free ghosts of human erythrocytes. J.T. Dodge 1962, Archives of biochemistry and biophysics.

[13] Dernedde, J; Papp, I; Enders, S; Wedepohl, S; Paulus, F; Haag, R. Journal of Carbohydrate Chemistry 2011, 30, 347-360.

[14] Papp, I; Dernedde, J; Enders, S; Haag, R. Chem. Comm. 2008, 44, 5851-5853.

[15] Dernedde, J; Rausch, A; Weinhart, M; S. Enders, S; et al, Proc. Nat. Aca. Sci. USA 2010, 107, 19679-19684.

[16] Bernardi, A; Jiménez-Barbero, J; Casnati, A.; et al. Chem. Soc. Rev. 2013, 42, 4709-4727.

[17] Erberich, M.; Keul, H.; Möller, M. Macromolecules 2007, 40, 3070-3079.


## Claims

1. Linear polyglycerol compound, comprising an optionally terminally substituted backbone of linearly linked glycerol units, **characterized in that** it carries a plurality of substituents in the nature of covalently bound residues chosen from the group consisting of sialic acid and sialic acid derivatives, wherein a degree of substitution of the backbone is between 10 and 100 %.

2. Linear polyglycerol compound according to claim 1, **characterized in that** the substituents are at least one sialic acid derivative according to general formulae (I) or (II), wherein a covalent bond is formed between a carbon atom of the polyglycerol backbone and residue Y of the sialic acid derivative:

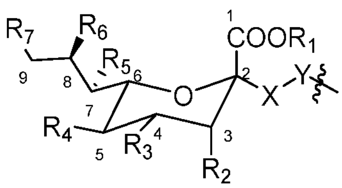

(I)

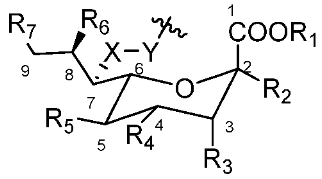

(II)

wherein
in formula (I)

$R_1$ = H or $CH_3$,
$R_2$ = H, F, Cl, Br, or $NHC(NH)NH_2$,
$R_3$ = H, OH, F, Cl, or Br,
$R_4$ = $NHCH_2COOH$, $SCH_2COOH$, $NHCO(CH_2)_nCH_3$, or $SCO(CH_2)_nCH_3$,
$R_5$ = H, OH, F, Cl, Br, $OCONH_2$, or $OCONH(CH_2)_nCH_3$,
$R_6$ = H, OH, F, Cl, Br, $OCONH_2$, or $OCONH(CH_2)_nCH_3$,
$R_7$ = H, OH, F, Cl, Br, $OCONH_2$, or $OCONH(CH_2)_nCH_3$, and
X = S and Y = $CH_2$, $(CH_2)_3O$, or $CH_2(CCHNNN)$, or
X = O and Y = $NHCH_2$, and
n = 0 to 10, independently from other variables n in the same molecule or in other molecules

and in formula (II)

$R_1$ = H or $CH_3$,
$R_2$ = H, OH, or F,
$R_3$ = H, F, or $NHC(NH)NH_2$,
$R_4$ = H, OH, F, Cl, Br,
$R_5$ = $NHCH_2COOH$, $SCH_2COOH$, $NHCOCH_2OH$, $NHCO(CH_2)_nCH_3$, or $SCO(CH_2)_nCH_3$, $R_6$ = H, OH, F, Cl, Br, $OCONH_2$, or $OCONH(CH_2)_nCH_3$,
$R_7$ = H, OH, F, Cl, Br, $OCONH_2$, or $OCONH(CH_2)_nCH_3$, and
X = S and Y = $CH_2$, $(CH_2)_3O$, or $CH_2(CCHNNN)$, or
X = NH and Y = $COCH_2$, and
n = 0 to 10, independently from other variables n in the same molecule or in other molecules,

wherein the bond between the C2 atom and the C3 atom in formula (II) can be single bond or a double bond.

3. Linear polyglycerol compound according to claim 2, **characterized in that** the substituents correspond to formula (I), wherein $R_1$ = H, $R_2$ = H, $R_3$ = OH, $R_4$ = $NHCOCH_3$, $R_5$ = OH, $R_6$ = OH, $R_7$ = OH, X = S and Y = $(CH_2)_3O$ or $CH_2(CCHNNN)$.

4. Linear polyglycerol compound according to claim 2 or 3, **characterized in that** the substituents correspond to formula (II), wherein $R_1$ = H, $R_2$ = H, $R_3$ = H, $R_4$ = OH, $R_5$ = $NHCOCH_3$, $R_6$ = OH, $R_7$ = OH, X = S and Y = $(CH_2)_3O$ or $CH_2(CCHNNN)$.

5. Linear polyglycerol compound according to any of the preceding claims, **characterized in that** the degree of substitution of the backbone is between 10 and 80 %.

6. Linear polyglycerol compound according to any of the preceding claims, **characterized in that** the glycerol residues of the backbone are 1,2-linked or 1,3-linked to each other.

7. Linear polyglycerol compound according to any of the preceding claims, **characterized in that** it has one the following formulae:

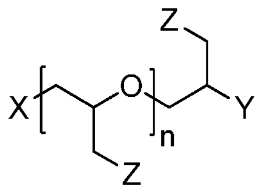

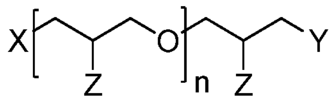

with

n = 5 to 1000,
X, Y = independently from each other any organic residue with a functional group chosen from the group consisting of alcohol, amine, thiol, azide, alkyne, alkene, carboxylic acid, aldehyde, ketone, halogen, isocyanate, isothiocyanate, Michael acceptor/donor group,
Z = independently from other residues Z in the same polyglycerol molecule a residue chosen from the group consisting of OH, sialic acid and sialic acid derivatives,

wherein 10 to 100 % of all residues Z are distinct from OH.

**8.** Linear polyglycerol compound according to any of the preceding claims, **characterized in that** it has a number average molecular weight of 1 kDa to 100 kDa determined by gel permeation chromatography.

**9.** Linear polyglycerol compound according to any of the preceding claims, **characterized in that** it comprises an end functionalization with a functional group chosen from the group consisting of azide, bromine, chlorine, iodine, fluorine, primary amine, secondary amine, tertiary amine, carboxylic acids, thiols, disulfides, ketals, acetals, aldehydes, hydroxyl, isocyanate, isothiocyante, unsaturated carbon-carbon units having double or triple bonds, a Michael acceptor, such as an $\alpha,\beta$-unsaturated aldehyde, ketone, ester, carboxylic acid amide, carboxylic acid imide, such as maleimide, or an $\alpha,\beta$-unsaturated nitrile, and a Michael donator, such as organic copper compounds, amines, thiols, phenolate ions, cyanides and acrylates.

**10.** Linear polyglycerol compound according to any of the preceding claims for use as a prophylactic or therapeutic agent.

**11.** Linear polyglycerol compound according to any of the preceding claims for use as an antiviral agent, an antibacterial agent or an anti-inflammatory agent.

**12.** Combined preparation comprising a linear polyglycerol compound according to any of claims 1 to 9 and a neuraminidase inhibitor.

**13.** Combined preparation according to claim 12 for simultaneous, separate or sequential use of its pharmaceutically active ingredients in antiviral, antibacterial, or anti-inflammatory prophylaxis or therapy.

**14.** Combined preparation according to claim 12 for use according to claim 13, **characterized in that** it is used in antiviral prophylaxis or therapy against influenza virus.

**15.** Method for manufacturing a linear polyglycerol compound according to any of claims 1 to 9, **characterized by** the following steps:

a) providing a linear polyglycerol compound, comprising a backbone of linearly linked glycerol residues bearing hydroxyl groups or other functional groups chosen from the group consisting of allyl, azides, alkynes, alkenes, thiols, halogens, primary or secondary amines, carboxylic acids, aldehydes, ketons and any Michael donor or acceptor for conjugation of anionically charged entities, and
b) causing a reaction of at least some of these hydroxyl groups or these other functional groups of the linear polyglycerol compound provided in step a) with a compound able to introduce a residue chosen from the group consisting of sialic acid and sialic acid derivatives into the linear polyglycerol compound.

**Patentansprüche**

1. Geradkettige Polyglycerinverbindung, umfassend ein gegebenenfalls terminal substituiertes Rückgrat von geradkettig verbundenen Glycerineinheiten, **dadurch gekennzeichnet, dass** sie mehrere Substituenten von der Art kovalent gebundener Reste ausgewählt aus der aus Sialinsäure und Sialinsäurederivaten bestehenden Gruppe trägt, wobei der Substitutionsgrad des Rückgrats zwischen 10 und 100% liegt.

2. Geradkettige Polyglycerinverbindung nach Anspruch 1, **dadurch gekennzeichnet, dass** es sich bei den Substituenten um mindestens ein Sialinsäurederivat gemäß der allgemeinen Formel (I) oder (II) handelt, wobei zwischen einem Kohlenstoffatom des Polyglycerinrückgrats und dem Rest Y des Sialinsäurederivats eine kovalente Bindung ausgebildet wird:

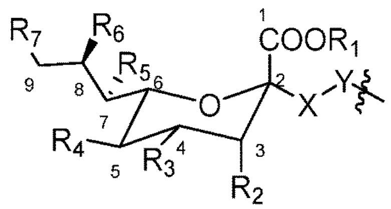

(I)

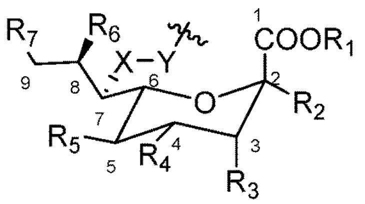

(II)

,

wobei
in der Formel (I)

$R_1$ = H oder $CH_3$,
$R_2$ = H, F, Cl, Br oder $NHC(NH)NH_2$,
$R_3$ = H, OH, F, Cl oder Br,
$R_4$ = $NHCH_2COOH$, $SCH_2COOH$, NHCO $(CH_2)_nCH_3$ oder $SCO(CH_2)_nCH_3$,
$R_5$ = H, OH, F, Cl, Br, $OCONH_2$ oder OCONH $(CH_2)_nCH_3$,
$R_6$ = H, OH, F, Cl, Br, $OCONH_2$ oder OCONH $(CH_2)_nCH_3$,
$R_7$ = H, OH, F, Cl, Br, $OCONH_2$ oder $OCONH(CH_2)_nCH_3$ und X = S und Y = $CH_2$, $(CH_2)_3O$ oder $CH_2(CCHNNN)$ oder
X = O und Y = $NHCH_2$ und
n = 0 bis 10, unabhängig von anderen Variablen n im gleichen Molekül oder in anderen Molekülen,

und in der Formel (II)

$R_1$ = H oder $CH_3$,
$R_2$ = H, OH oder F,
$R_3$ = H, F oder $NHC(NH)NH_2$,
$R_4$ = H, OH, F, Cl, Br,
$R_5$ = $NHCH_2COOH$, $SCH_2COOH$, $NHCOCH_2OH$, $NHCO(CH_2)_nCH_3$ oder $SCO(CH_2)_nCH_3$,
$R_6$ = H, OH, F, Cl, Br, $OCONH_2$ oder $OCONH(CH_2)_nCH_3$,
$R_7$ = H, OH, F, Cl, Br, $OCONH_2$ oder $OCONH(CH_2)_nCH_3$ und
X = S und Y = $CH_2$, $(CH_2)_3O$ oder $CH_2(CCHNNN)$ oder
X = NH und Y-$COCH_2$ und
n = 0 bis 10, unabhängig von anderen Variablen n im gleichen Molekül oder in anderen Molekülen,

wobei es sich bei der Bindung zwischen dem C2-Atom und dem C3-Atom in Formel (II) um eine Einfachbindung oder eine Doppelbindung handelt.

**3.** Geradkettige Polyglycerinverbindung nach Anspruch 2, **dadurch gekennzeichnet, dass** die Substituenten Formel (I) entsprechen, wobei $R_1$ = H, $R_2$ = H, $R_3$ = OH, $R_4$ = $NHCOCH_3$, $R_5$ = OH, $R_6$ = OH, $R_7$ = OH, X = S und Y = $(CH_2)_3O$ oder $CH_2(CCHNNN)$.

**4.** Geradkettige Polyglycerinverbindung nach Anspruch 2 oder 3, **dadurch gekennzeichnet, dass** die Substituenten Formel (II) entsprechen, wobei $R_1$ = H, $R_2$ = H, $R_3$ = H, $R_4$ = OH, $R_5$ = $NHCOCH_3$, $R_6$ = OH, $R_7$ = OH, X = S und Y = $(CH_2)_3O$ oder $CH_2(CCHNNN)$.

**5.** Geradkettige Polyglycerinverbindung nach einem der vorhergehenden Ansprüche, **dadurch gekennzeichnet, dass** der Substitutionsgrad des Rückgrats zwischen 10 und 80% liegt.

**6.** Geradkettige Polyglycerinverbindung nach einem der vorhergehenden Ansprüche, **dadurch gekennzeichnet, dass** die Glycerinreste des Rückgrats miteinander 1,2-verbunden oder 1,3-verbunden sind.

**7.** Geradkettige Polyglycerinverbindung nach einem der vorhergehenden Ansprüche, **dadurch gekennzeichnet, dass** sie eine der folgenden Formeln aufweist:

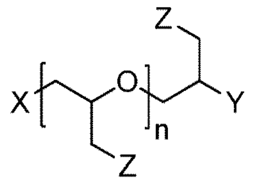

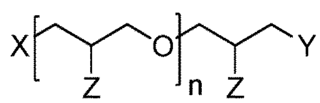

,

wobei

n = 5 bis 1000,
X, Y = unabhängig voneinander ein beliebiger organischer Rest mit einer funktionellen Gruppe ausgewählt aus der Gruppe bestehend aus Alkohol, Amin, Thiol, Azid, Alkin, Alken, Carbonsäure, Aldehyd, Keton, Halogen, Isocyanat, Isothiocyanat, Michael-Acceptor/Donor-Gruppe,
Z = unabhängig von anderen Resten Z im gleichen Polyglycerinmolekül ein Rest ausgewählt aus der Gruppe bestehend aus OH, Sialinsäure und Sialinsäurederivaten,

wobei 10 bis 100% aller Reste Z von OH verschieden sind.

**8.** Geradkettige Polyglycerinverbindung nach einem der vorhergehenden Ansprüche, **dadurch gekennzeichnet, dass** sie ein zahlenmittleres Molekulargewicht von 1 kDa bis 100 kDa, bestimmt durch Gelpermeationschromatographie, aufweist.

**9.** Geradkettige Polyglycerinverbindung nach einem der vorhergehenden Ansprüche, **dadurch gekennzeichnet, dass** sie eine Endfunktionalisierung mit einer funktionellen Gruppe ausgewählt aus der Gruppe bestehend aus Azid, Brom, Chlor, Jod, Fluor, primärem Amin, sekundärem Amin, tertiärem Amin, Carbonsäuren, Thiolen, Disulfiden, Ketalen, Acetalen, Aldehyden, Hydroxyl, Isocyanat, Isothiocyanat, ungesättigten Kohlenstoff-Kohlenstoff-Einheiten mit Doppel- oder Dreifachbindungen, einem Michael-Akzeptor wie einem $\alpha,\beta$-ungesättigten Aldehyd, Keton, Ester, Carbonsäureamid, Carbonsäureimid wie Maleimid oder einem $\alpha,\beta$-ungesättigten Nitril, und einem Michael-Donator wie organischen Kupferverbindungen, Aminen, Thiolen, Phenolationen, Cyaniden und Acrylaten, aufweist.

**10.** Geradkettige Polyglycerinverbindung nach einem der vorhergehenden Ansprüche zur Verwendung als Prophylaktikum oder Therapeutikum.

**11.** Geradkettige Polyglycerinverbindung nach einem der vorhergehenden Ansprüche zur Verwendung als antivirales Mittel, antibakterielles Mittel oder entzündungshemmendes Mittel.

**12.** Kombinationspräparat, umfassend eine geradkettige Polyglycerinverbindung nach einem der Ansprüche 1 bis 9 und einen Neuraminidasehemmer.

**13.** Kombinationspräparat nach Anspruch 12 zur gleichzeitigen, getrennten oder aufeinanderfolgenden Anwendung

seiner pharmazeutischen Wirkstoffe in der antiviralen, antibakteriellen oder entzündungshemmenden Prophylaxe oder Therapie.

**14.** Kombinationspräparat nach Anspruch 12 zur Verwendung nach Anspruch 13, **dadurch gekennzeichnet, dass** es in der antiviralen Prophylaxe oder Therapie gegen Influenzavirus eingesetzt wird.

**15.** Verfahren zur Herstellung einer geradkettigen Polyglycerinverbindung nach einem der Ansprüche 1 bis 9, **gekennzeichnet durch** die folgenden Schritte:

a) die Bereitstellung einer ein Rückgrat von geradkettig gebundenen Glycerinresten, die Hydroxylgruppen oder andere funktionelle Gruppen ausgewählt aus der Gruppe bestehend aus Allyl, Aziden, Alkinen, Alkenen, Thiolen, Halogenen, primären oder sekundären Aminen, Carbonsäuren, Aldehyden, Ketonen und einem beliebigen Michael-Donor oder -Akzeptor zur Konjugation anionisch geladener Einheiten tragen, umfassenden geradkettigen Polyglycerinverbindung und
b) das Herbeiführen einer Reaktion mindestens einiger dieser Hydroxylgruppen oder dieser anderen funktionellen Gruppen der in Schritt a) bereitgestellten geradkettigen Polyglycerinverbindung mit einer Verbindung, die dazu fähig ist, einen Rest ausgewählt aus der Gruppe bestehend aus Sialinsäure und Sialinsäurederivaten in die geradkettige Polyglycerinverbindung einzuführen.

## Revendications

**1.** Composé de polyglycérol linéaire, comprenant un squelette de motifs de glycérol linéairement liés avec substitution terminale facultative, **caractérisé en ce qu'**il comporte une pluralité de substituants sous la forme de résidus liés de façon covalente choisis dans le groupe constitué de l'acide sialique et de dérivés d'acide sialique, dans lequel un degré de substitution du squelette est compris entre 10 et 100 %.

**2.** Composé de polyglycérol linéaire selon la revendication 1, **caractérisé en ce que** les substituants sont au moins un dérivé d'acide sialique selon les formules générales (I) ou (II), dans lequel une liaison covalente est formée entre un atome de carbone du squelette de polyglycérol et le résidu Y du dérivé d'acide sialique :

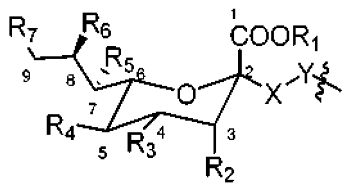

(I)

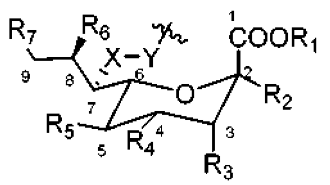

(II)

dans lequel dans la formule (I)

$R_1$ = H ou $CH_3$,
$R_2$ = H, F, Cl, Br ou $NHC(NH)NH_2$,
$R_3$ = H, OH, F, Cl ou Br,
$R_4$ = $NHCH_2COOH$, $SCH_2COOH$, $NHCO(CH_2)_nCH_3$ ou $SCO(CH_2)_nCH_3$,
$R_5$ = H, OH, F, Cl, Br, $OCONH_2$ ou $OCONH(CH_2)_nCH_3$,
$R_6$ = H, OH, F, Cl, Br, $OCONH_2$ ou $OCONH(CH_2)_nCH_3$,
$R_7$ = H, OH, F, Cl, Br, $OCONH_2$ ou OCONH $(CH_2)_nCH_3$, et
X = S et Y = $CH_2$, $(CH_2)_3O$, ou $CH_2(CCHNNN)$, ou
X = O et Y = $NHCH_2$, et
n = 0 à 10, indépendamment des autres variables n dans la même molécule ou dans d'autres molécules

et dans la formule (II)

$R_1$ = H ou $CH_3$,
$R_2$ = H, OH ou F,
$R_3$ = H, F ou $NHC(NH)NH_2$,
$R_4$ = H, OH, F, Cl, Br,
$R_5$ = $NHCH_2COOH$, $SCH_2COOH$, $NHCOCH_2OH$, NHCO $(CH_2)_nCH_3$ ou $SCO(CH_2)nCH_3$,
$R_6$ = H, OH, F, Cl, Br, $OCONH_2$ ou $OCONH(CH_2)_nCH_3$,
$R_7$ = H, OH, F, Cl, Br, $OCONH_2$ ou $OCONH(CH_2)_nCH_3$, et
X = S et Y = $CH_2$, $(CH_2)_3O$ ou $CH_2$(CCHNNN), ou
X = NH et Y = $COCH_2$, et
n = 0 à 10, indépendamment des autre variables n dans la même molécule ou dans d'autres molécules,

dans lequel la liaison entre l'atome C2 et l'atome C3 dans la formule (II) peut être une simple liaison ou une double liaison.

3. Composé de polyglycérol linéaire selon la revendication 2, **caractérisé en ce que** les substituants correspondent à la formule (I), dans laquelle $R_1$ = H, $R_2$ = H, $R_3$ = OH, $R_4$ = $NHCOCH_3$, $R_5$ = OH, $R_6$ = OH, $R_7$ = OH, X = S et Y = $(CH_2)_3O$ ou $CH_2$(CCHNNN).

4. Composé de polyglycérol linéaire selon la revendication 2 ou 3, **caractérisé en ce que** les substituants correspondent à la formule (II), dans laquelle $R_1$ = H, $R_2$ = H, $R_3$ = H, $R_4$ = OH, $R_5$ = $NHCOCH_3$, $R_6$ = OH, $R_7$ = OH, X = S et Y = $(CH_2)_3O$ ou $CH_2$ (CCHNNN).

5. Composé de polyglycérol linéaire selon l'une quelconque des revendications précédentes, **caractérisé en ce que** le degré de substitution du squelette est compris entre 10 et 80 %.

6. Composé de polyglycérol linéaire selon l'une quelconque des revendications précédentes, **caractérisé en ce que** les résidus de glycérol du squelette sont 1,2-liés ou 1,3-liés les uns aux autres.

7. Composé de polyglycérol linéaire selon l'une quelconque des revendications précédentes, **caractérisé en ce qu'**il a l'une des formules suivantes :

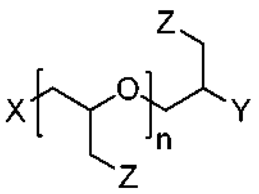

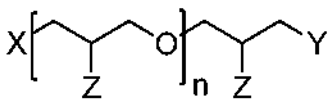

avec

n = 5 à 1000,
X, Y = indépendamment l'un de l'autre, un résidu organique quelconque avec un groupe fonctionnel choisi dans le groupe constitué d'un groupe alcool, amine, thiol, azide, alcyne, alcène, acide carboxylique, aldéhyde, cétone, halogène, isocyanate, isothiocyanate, accepteur/donneur de Michael,
Z = indépendamment des autres résidus Z dans la même molécule de polyglycérol, un résidu choisi dans le groupe constitué de OH, acide sialique et des dérivés d'acide sialique,

dans lequel 10 à 100 % de l'ensemble des résidus Z sont distincts de OH.

8. Composé de polyglycérol linéaire selon l'une quelconque des revendications précédentes, **caractérisé en ce qu'**il a un poids moléculaire moyen en nombre de 1 kDa à 100 kDa déterminé par chromatographie par perméation de gel.

9. Composé de polyglycérol linéaire selon l'une quelconque des revendications précédentes, **caractérisé en ce qu'**il comprend une fonctionnalisation terminale avec un groupe fonctionnel choisi dans le groupe constitué d'azide, brome, chlore, iode, fluor, amine primaire, amine secondaire, amine tertiaire, acides carboxyliques, thiols, disulfures,

cétals, acétals, aldéhydes, hydroxyle, isocyanate, isothiocyanate, des motifs carbone-carbone insaturés ayant des doubles ou triples liaisons, un accepteur de Michael, tel qu'un aldéhyde $\alpha,\beta$-insaturé, une cétone, un ester, un amide d'acide carboxylique, un imide d'acide carboxylique, tel que maléimide, ou un nitrile $\alpha,\beta$-insaturé, et un donneur de Michael, tel que des composés de cuivre organiques, des amines, des thiols, des ions phénolate, des cyanures et des acrylates.

**10.** Composé de polyglycérol linéaire selon l'une quelconque des revendications précédentes pour utilisation en tant qu'agent prophylactique ou thérapeutique.

**11.** Composé de polyglycérol linéaire selon l'une quelconque des revendications précédentes pour utilisation en tant qu'agent antiviral, agent antibactérien ou agent anti-inflammatoire.

**12.** Préparation combinée comprenant un composé de polyglycérol linéaire selon l'une quelconque des revendications 1 à 9 et un inhibiteur de neuraminidase.

**13.** Préparation combinée selon la revendication 12, pour utilisation simultanée, séparée ou séquentielle de ses substances pharmaceutiquement actives dans une prophylaxie ou thérapie antivirale, antibactérienne ou anti-inflammatoire .

**14.** Préparation combinée selon la revendication 12, pour utilisation selon la revendication 13, **caractérisée en ce qu'**elle est utilisée en prophylaxie ou thérapie antivirale contre le virus de la grippe.

**15.** Procédé de fabrication d'un composé de polyglycérol linéaire selon l'une quelconque des revendications 1 à 9, **caractérisé par** les étapes suivantes :

a) fourniture d'un composé de polyglycérol linéaire, comprenant un squelette de résidus glycérol linéairement liés portant des groupes hydroxyle ou d'autres groupes fonctionnels choisis dans le groupe constitué d'allyle, azides, alcynes, alcènes, thiols, halogènes, amines primaires ou secondaires, acides carboxyliques, aldéhydes, cétones et un donneur ou accepteur de Michael quelconque pour la conjugaison d'entités anioniquement chargées, et
b) conduite d'une réaction d'au moins certains de ces groupes hydroxyle ou de ces autres groupes fonctionnels du composé de polyglycérol linéaire fourni dans l'étape a) avec un composé capable d'introduire un résidu choisi dans le groupe constitué de l'acide sialique et de dérivés d'acide sialique dans le composé de polyglycérol linéaire.

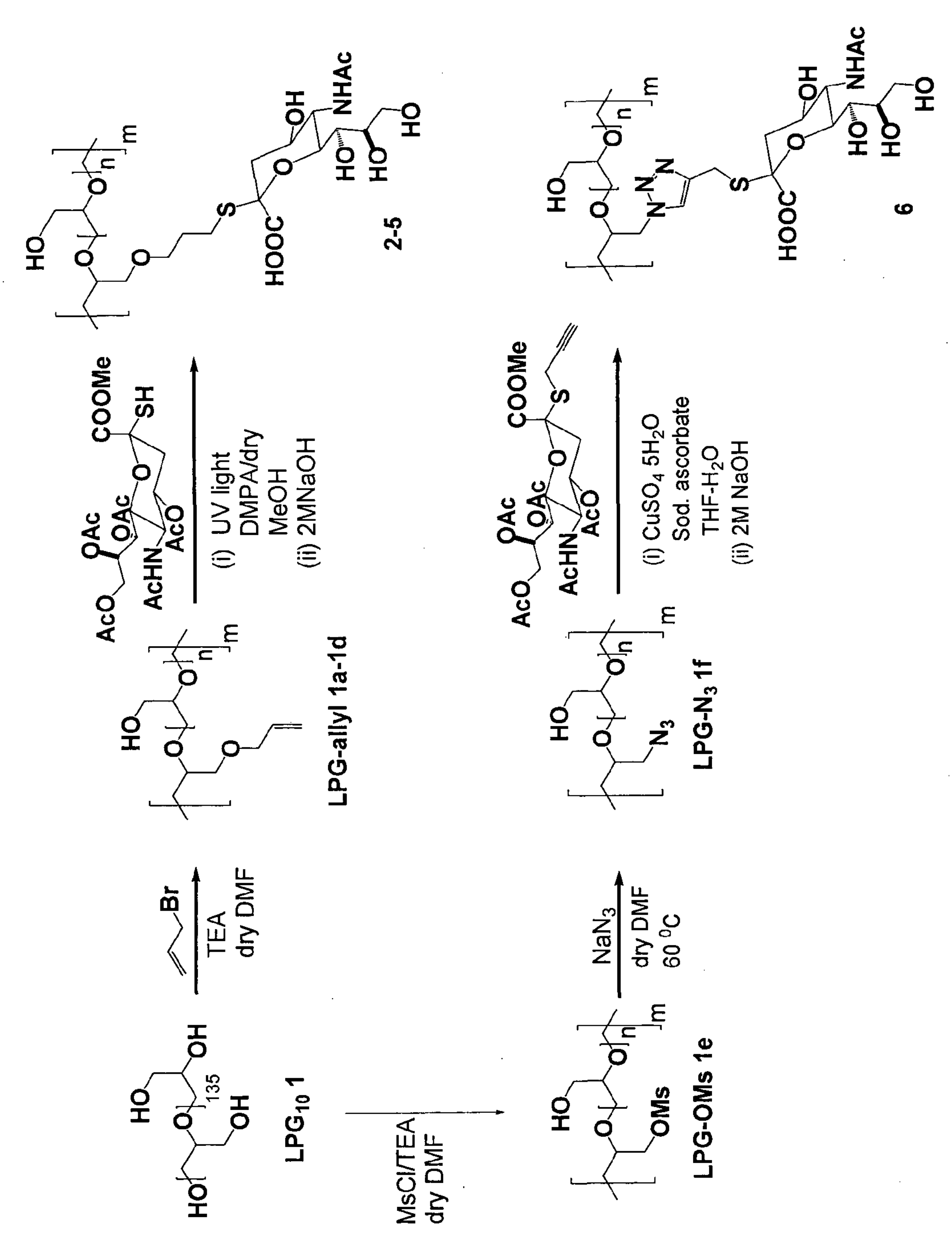


$LPG_{10}$ 1

LPG-allyl 1a-1d

2-5

LPG-OMs 1e

LPG-$N_3$ 1f

6

FIG 1

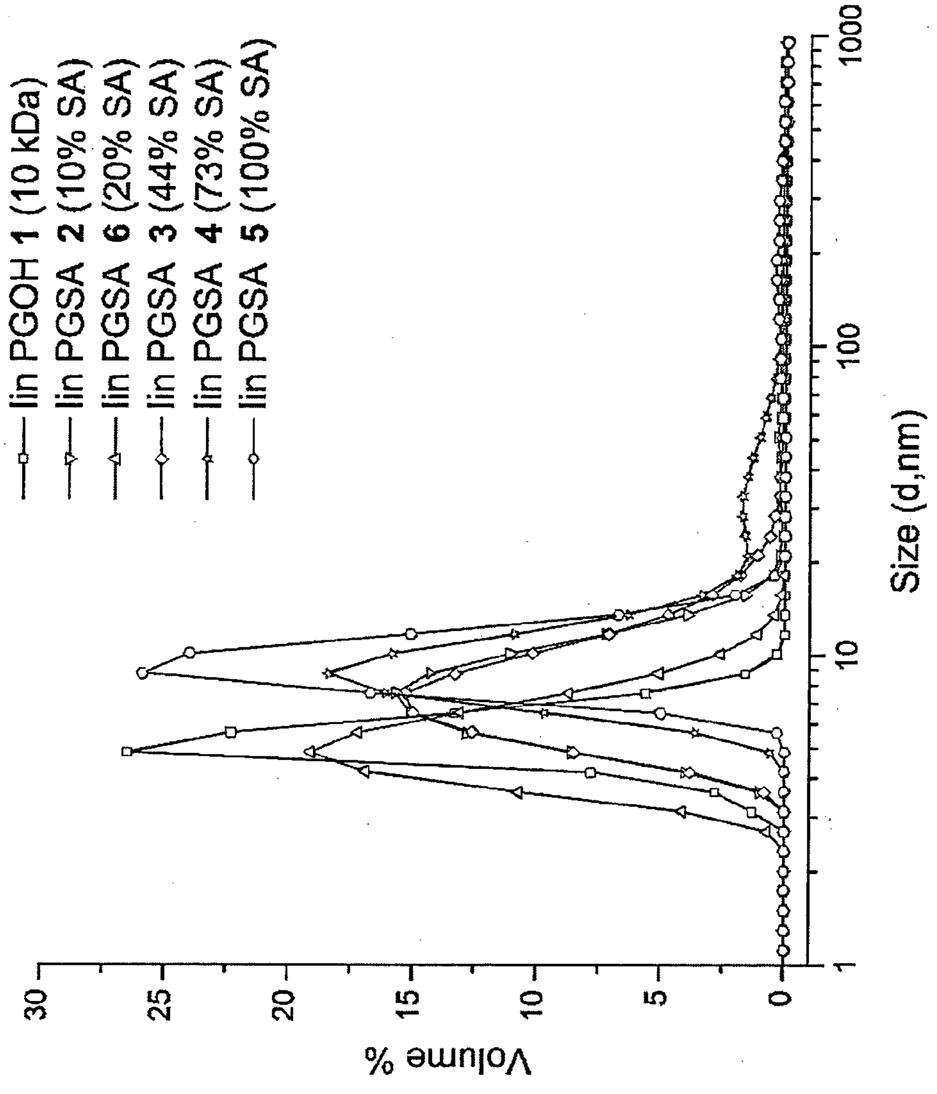
lin PGOH 1 (10 kDa)
lin PGSA 2 (10% SA)
lin PGSA 6 (20% SA)
lin PGSA 3 (44% SA)
lin PGSA 4 (73% SA)
lin PGSA 5 (100% SA)
Volume %
30
25
20
15
10
5
0
1
10
100
1000
Size (d,nm)

FIG 2

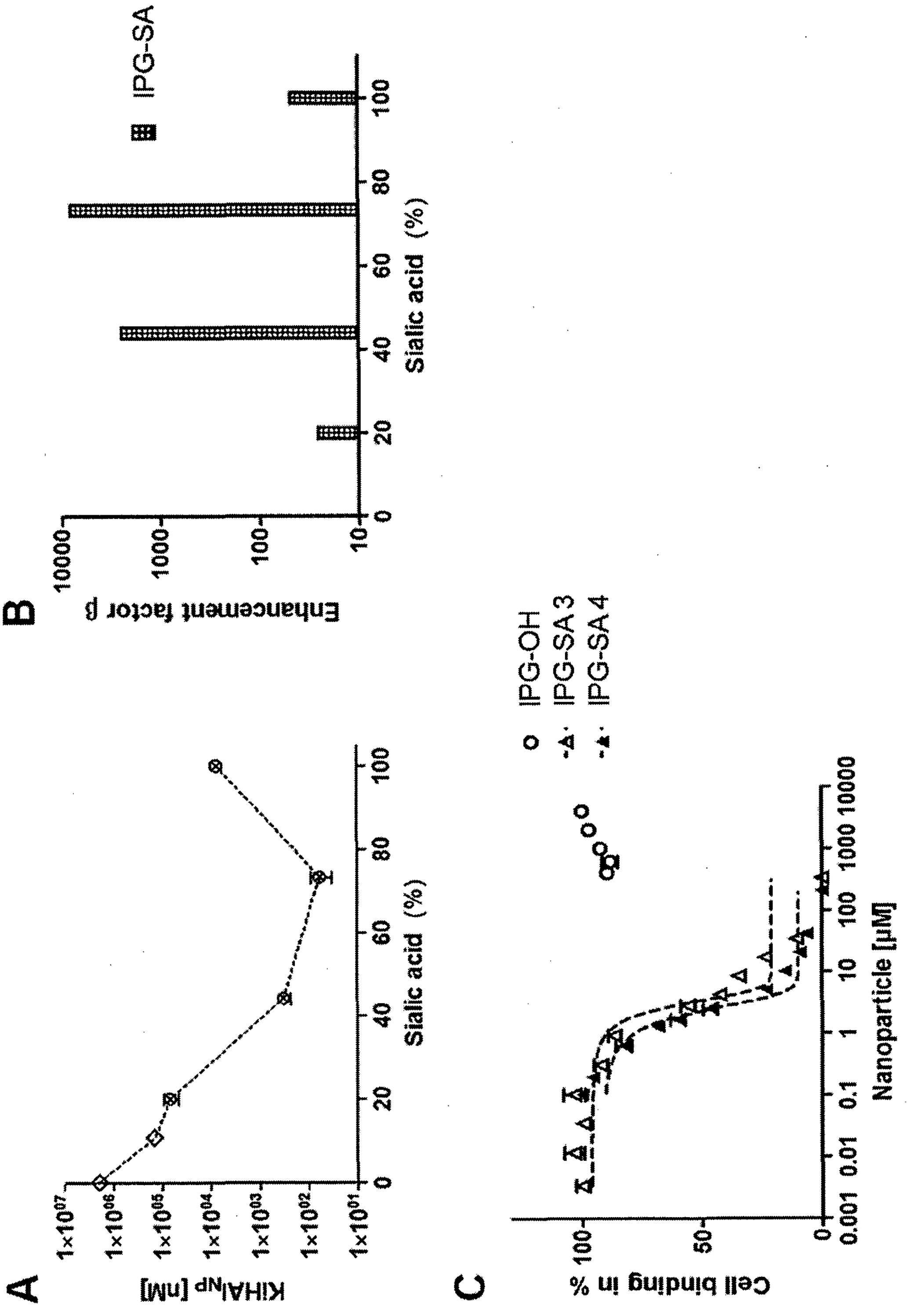
A
KiHAI$_{NP}$ [nM]
1×10$^{07}$
1×10$^{06}$
1×10$^{05}$
1×10$^{04}$
1×10$^{03}$
1×10$^{02}$
1×10$^{01}$
0
20
40
60
80
100
Sialic acid (%)
B
Enhancement factor β
10000
1000
100
10
0
20
40
60
80
100
Sialic acid (%)
IPG-SA
C
Cell binding in %
100
50
0
0.001
0.01
0.1
1
10
100
1000
10000
Nanoparticle [µM]
IPG-OH
IPG-SA 3
IPG-SA 4

FIG 3

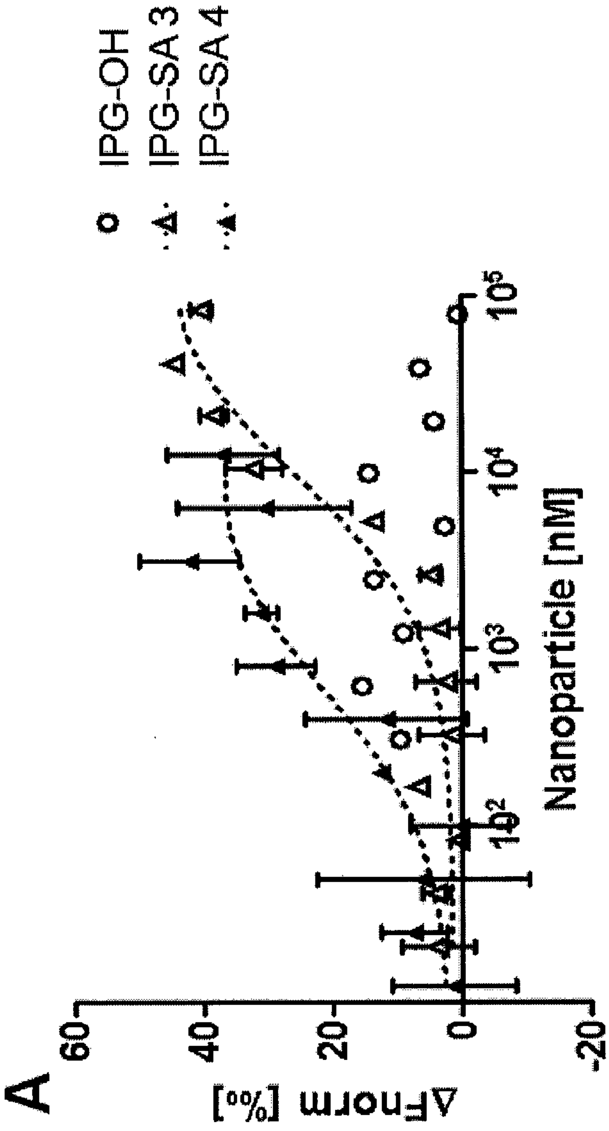
A
60
40
20
0
-20
ΔFnorm [‰]
10²
10³
10⁴
10⁵
Nanoparticle [nM]
IPG-OH
IPG-SA 3
IPG-SA 4

FIG 4

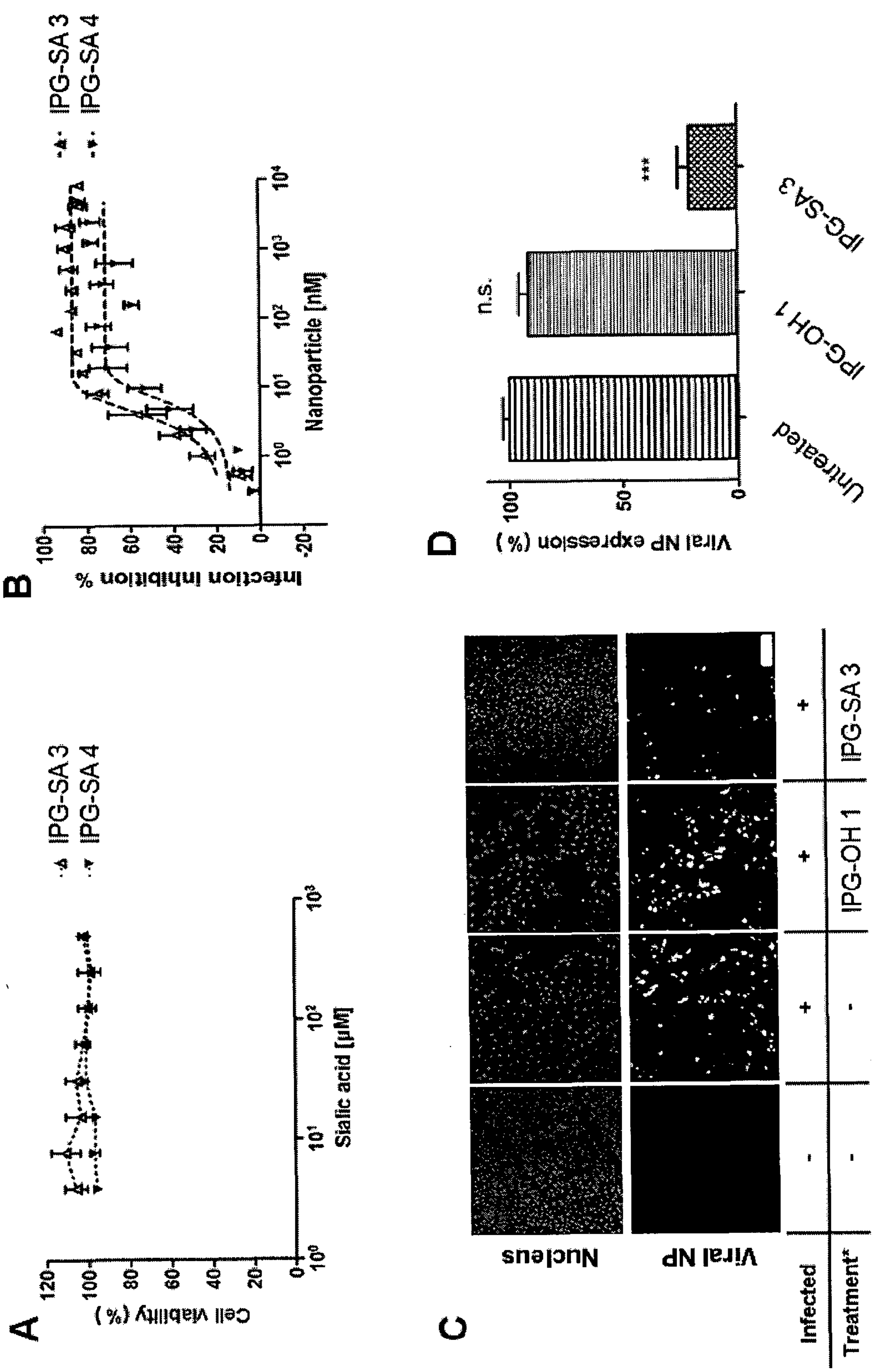
A
Cell viability (%)
Sialic acid [µM]
IPG-SA 3
IPG-SA 4
B
Infection inhibition %
Nanoparticle [nM]
IPG-SA 3
IPG-SA 4
C
Nucleus
Viral NP
Infected
Treatment*
IPG-OH 1
IPG-SA 3
D
Viral NP expression (%)
n.s.
***
Untreated
IPG-OH 1
IPG-SA 3

FIG 5

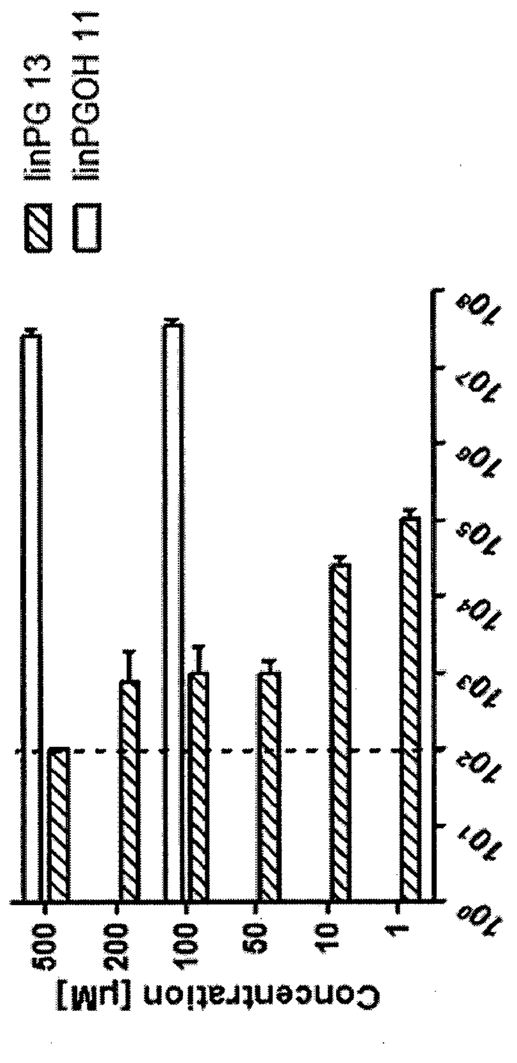
linPG 13
linPGOH 11
Concentration [µM]
500
200
100
50
10
1
pfu/ml
$10^0$
$10^1$
$10^2$
$10^3$
$10^4$
$10^5$
$10^6$
$10^7$
$10^8$

FIG 6

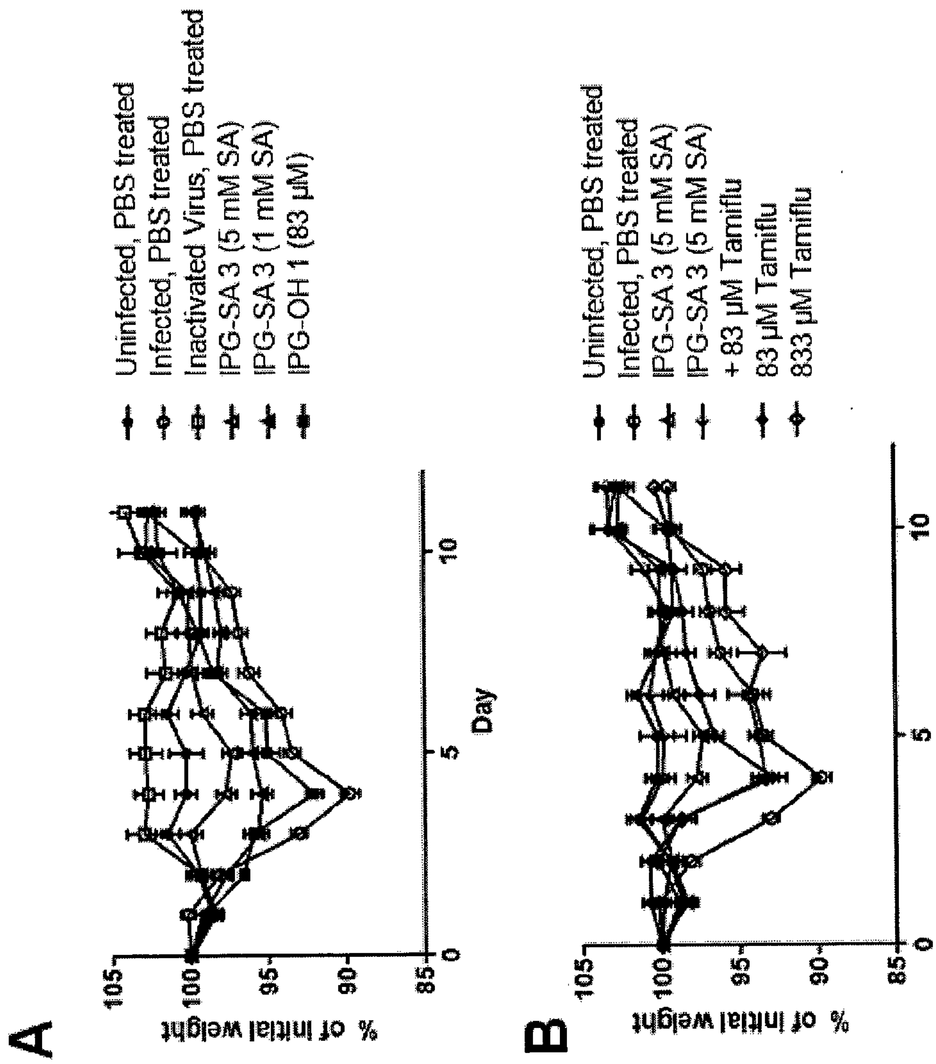
A
% of initial weight
105
100
95
90
85
0
5
10
Day
Uninfected, PBS treated
Infected, PBS treated
Inactivated Virus, PBS treated
IPG-SA 3 (5 mM SA)
IPG-SA 3 (1 mM SA)
IPG-OH 1 (83 µM)
B
% of initial weight
105
100
95
90
85
0
5
10
Day
Uninfected, PBS treated
Infected, PBS treated
IPG-SA 3 (5 mM SA)
IPG-SA 3 (5 mM SA)
+ 83 µM Tamiflu
83 µM Tamiflu
833 µM Tamiflu

FIG 7

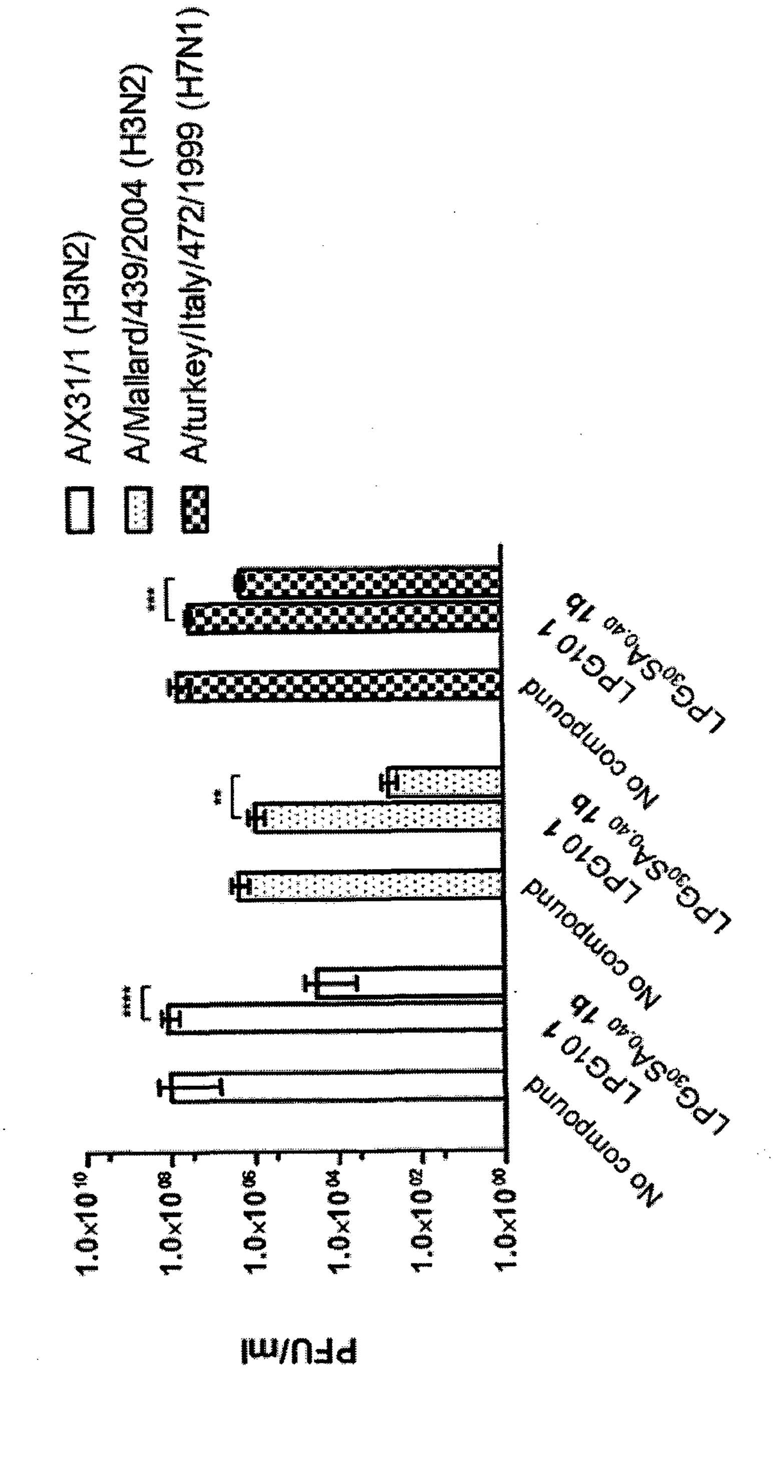
A/X31/1 (H3N2)
A/Mallard/439/2004 (H3N2)
A/turkey/Italy/472/1999 (H7N1)
PFU/ml
1.0×10^10
1.0×10^08
1.0×10^06
1.0×10^04
1.0×10^02
1.0×10^00
****
**
***
No compound
LPG10 1
LPG30SA0.40 1b
No compound
LPG10 1
LPG30SA0.40 1b
No compound
LPG10 1
LPG30SA0.40 1b

FIG 8

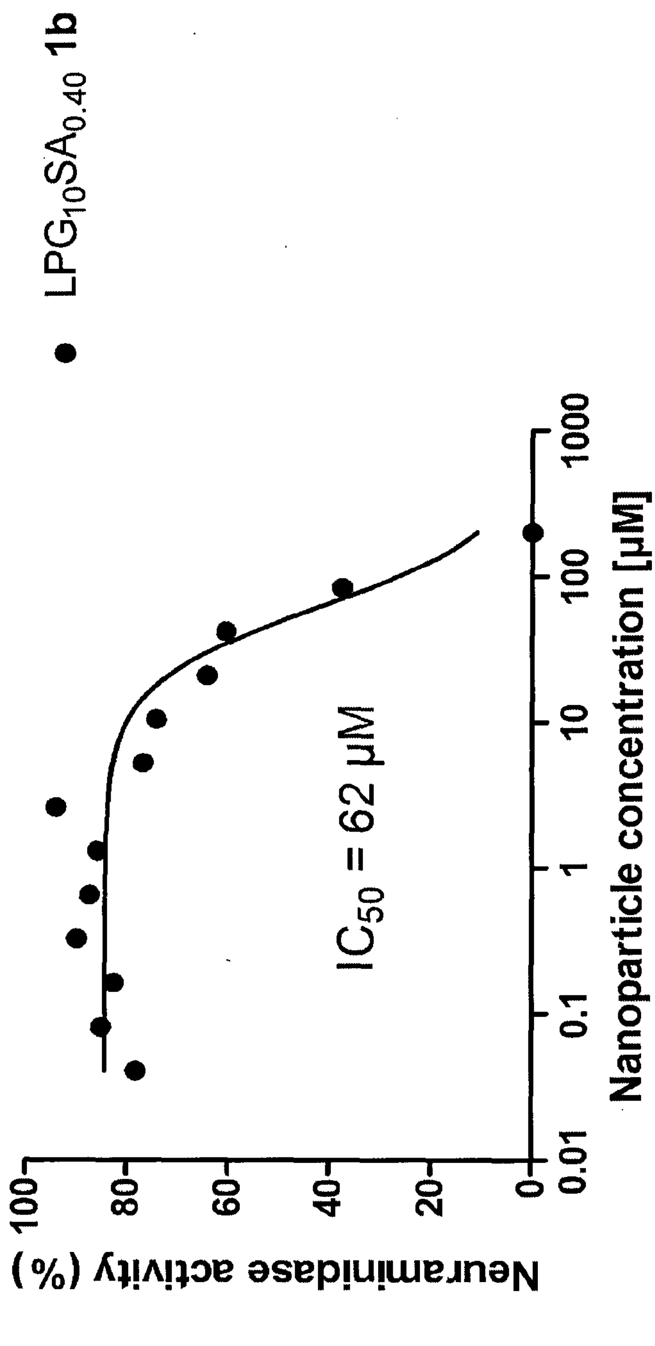
LPG10SA0.40 1b
IC50 = 62 µM
Neuraminidase activity (%)
100
80
60
40
20
0
0.01
0.1
1
10
100
1000
Nanoparticle concentration [µM]

FIG 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2009032605 A2


### Non-patent literature cited in the description


- **PAPP, I. ; SIEBEN, C. ; SISSON, A. L. ; KOSTKA, J. ; BÖTTCHER, C. ; LUDWIG, K. ; HERRMANN, A. ; HAAG, R.** *ChemBioChem,* 2011, vol. 12, 887-895
- **SUNDER, A. ; HANSELMANN, R. ; FREY, H. ; MÜLHAUPT, R.** *Macromolecules,* 1999, vol. 32, 4240-4246
- **HAAG, R. ; SUNDER, A ; STUMBÉ, J. F.** *J. Am. Chem.Soc.,* 2000, vol. 122, 2954-2955
- **SUNDER, A. ; MÜLHAUPT, R. ; HAAG, R. ; FREY, H.** *Adv. Mater.,* 2000, vol. 12, 235-239
- **UI-HAQ, M. I. ; SHENOI, R. A. ; BROOKS, D. E. ; KIZHAKKEDATHU, J. N.** *J. Polym. Sc. Part A: Polym. Chem.,* 2013, vol. 51, 2614-262
- **WILMS, D. ; WURM, F. ; NIEBERLE, J. ; BÖHM, P. ; KEMMER-JONAS, U. ; FREY, H.** *Macromolecules,* 2009, vol. 42, 3230-3236
- **GAN, Z. ; ROY, R.** *Can. J. Chem.,* 2002, vol. 80, 908-916
- **OGURA, H. ; FURUHATA, K. ; ITOH, M. ; SHITORI, Y.** *Carbohydr. Res.,* 1986, vol. 158, 37-51
- **VONNEMAN et al.** Size Dependence of Steric Shielding and Multivalency Effects for Globular Binding Inhibitors. *JACS,* 2015, 137
- **KITOV, P.I. ; BUNDLE, D.R.** On the Nature of the Multivalency Effect: A Thermodynamic Model. *JACS,* 2003, 125
- **CROSS, G.** *Semin. Avian Exot. Pet Med,* 2002, vol. 11, 15-18
- **J.T. DODGE.** The preparation and chemical characteristics of hemoglobin-free ghosts of human erythrocytes. *Archives of biochemistry and biophysics,* 1962
- **DERNEDDE, J ; PAPP, I ; ENDERS, S ; WEDEPOHL, S ; PAULUS, F ; HAAG, R.** *Journal of Carbohydrate Chemistry,* 2011, vol. 30, 347-360
- **PAPP, I ; DERNEDDE, J ; ENDERS, S ; HAAG, R.** *Chem. Comm.,* 2008, vol. 44, 5851-5853
- **DERNEDDE, J ; RAUSCH, A ; WEINHART, M ; S. ENDERS, S et al.** *Proc. Nat. Aca. Sci. USA,* 2010, vol. 107, 19679-19684
- **BERNARDI, A ; JIMÉNEZ-BARBERO, J ; CASNATI, A. et al.** *Chem. Soc. Rev.,* 2013, vol. 42, 4709-4727
- **ERBERICH, M. ; KEUL, H. ; MÖLLER, M.** *Macromolecules,* 2007, vol. 40, 3070-3079